# EUROPEAN PATENT SPECIFICATION

(11) **EP 4 411 998 B1**
(45) Date of publication and mention of the grant of the patent: **29.04.2026**
(21) Application number: 22875144.2
(22) Date of filing: 30.09.2022
(51) Int. Cl.: H01R 13/502, H01R 13/52, H01R 13/658, H01R 13/6591, H01R 13/66, H01R 24/00, H01M 50/249, H01M 50/296, H01M 50/503, H01M 50/507, H01R 13/04, H01R 13/10, H01R 13/08, H01R 13/707, H01R 13/405, H01R 13/193, H01R 31/08

(54) **FLAT-BELT TYPE CONNECTING MECHANISM, ELECTRIC ENERGY TRANSMISSION APPARATUS, AND MOTOR VEHICLE**
FLACHRIEMENVERBINDUNGSMECHANISMUS, ELEKTRISCHE ENERGIEÜBERTRAGUNGSVORRICHTUNG UND KRAFTFAHRZEUG
MÉCANISME DE CONNEXION DE TYPE À COURROIE PLATE, APPAREIL DE TRANSMISSION D'ÉNERGIE ÉLECTRIQUE ET VÉHICULE À MOTEUR

(30) Priority: 01.10.2021 CN 202111167060; 01.10.2021 CN 202122400678 U
(43) Date of publication of application: 07.08.2024
(73) Proprietor: Changchun Jetty Automotive Technology Co., Ltd., Changchun, Jilin 130000 (CN)
(72) Inventor: WANG, Chao, Changchun, Jilin 130000 (CN)
(74) Representative: Habermann, Hruschka & Schnabel
(86) International application number: PCT/CN2022/123135
(87) International publication number: WO 2023/051763

(56) References cited:
- EP-A1- 4 089 856
- CN-A- 101 295 821
- CN-A- 103 140 988
- CN-A- 103 140 988
- CN-A- 109 787 009
- CN-A- 113 300 171
- CN-A- 113 922 138
- CN-U- 208 849 076
- DE-U1- 202019 000 528

## Description

### RELATED APPLICATION

The present disclosure claims priority to Chinese Patent Application No. 202111167060.9, filed on October 1, 2021, and entitled 'busbar type connecting mechanism, electric energy transmission device, and motor vehicle' . The present disclosure also claims priority to Chinese Patent Application No.202122400678.7, filed on October 1, 2021, and entitled 'busbar type connecting mechanism, electric energy transmission device, and motor vehicle'.

### TECHNICAL FIELD

The present disclosure relates to the field of charging technologies, and particularly to a busbar type connecting mechanism, an electric energy transmission device, and a motor vehicle.

### BACKGROUND

The new energy battery of a new energy automobile uses a charging system for energy supplementation. In the charging system, besides a charging stand, there is a high-voltage busbar type connecting mechanism connected to a battery system. A charging harness is the most important unit in the high-voltage system of the electric automobile. The traditional charging harness uses a copper wire as a charging cable, and an end of the copper wire is connected to a plugging terminal, which is electrically connected to the battery system. At present, the high-voltage busbar type connecting mechanisms are all assembled connectors, which have the problems of complicated structure, difficult assembly and high connector cost. In addition, the high usage amount of copper and the complicated connection processing for the cables and terminals are also the reasons for the high cost of the high-voltage busbar type connecting mechanisms.

When high current passes through the high-voltage charging harness, electromagnetic interference may be caused to other parts. In order to avoid this electromagnetic interference, a shielding layer needs to be disposed outside the high-voltage charging harness, which significantly increases the cost and weight.

In addition, in the charging system, a temperature measuring structure is generally mounted on the charging stand rather than on the busbar type connecting mechanism. However, the busbar type connecting mechanism conducts the same current as the charging stand, so when the temperature of the busbar type connecting mechanism rises, there is a need to monitor and stop the charging operation in time to protect the safety of the charging harness and the battery system.

With the expansion of the market of the electric automobiles, the charging system is in urgent need of a busbar type connecting mechanism and an electric energy transmission device which have simple structure and low cost. Conventional busbar type connecting mechanisms are known from the prior art, for example from CN103140988A, EP4089856A1, and DE202019000528U1.

### SUMMARY

An objective of the present disclosure is to provide a busbar type connecting mechanism, in which busbars are stacked at a proper interval to effectively reduce electromagnetic interference to other parts after the busbars are electrified, thereby eliminating a shielding layer structure of a high-voltage charging harness and reducing the cost and weight. The present invention is set out in the appended set of claims. Any references to inventions or embodiments not falling within the scope of the independent claims are to be interpreted as examples useful for understanding the invention.

The above objective of the present disclosure can be achieved by adopting the following technical solutions.

The present disclosure provides a busbar type connecting mechanism, including a male-end connecting mechanism and a female-end connecting mechanism. The male-end connecting mechanism includes a busbar, a flat terminal, and a male-end housing connected to the busbar and the flat terminal. The female-end connecting mechanism includes a double-busbar, a clamping terminal, and a female-end housing connected to the double-busbar and the clamping terminal. The male-end connecting mechanism and the female-end connecting mechanism are electrically connected to each other through the clamping terminal and the flat terminal, and the male-end housing and the female-end housing are connected to each other, to form the busbar type connecting mechanism.

In an exemplary embodiment, the busbar has a cross-section with an aspect ratio of 1:1 to 120:1.

In an exemplary embodiment, the double-busbar has a cross-section with an aspect ratio of 1:1 to 120:1.

In an exemplary embodiment, there are at least two busbars, which are stacked from top to bottom. The male-end housing is integrally injection-molded between at least parts of the busbars and/or at least parts of the flat terminals, and/or is integrally injection-molded at outer peripheries of at least parts of the busbars and/or at least parts of the flat terminals, to form an insulating structure.

In an exemplary embodiment, the busbar includes a first flat wire core, and a first outer insulating layer which is partially peeled off to expose the first flat wire core. An end of the first outer insulating layer is inside or abutted against the male-end housing.

In an exemplary embodiment, the busbar includes a first flat wire core which has a hardness of 8 HV to 105 HV.

In an exemplary embodiment, there are at least two busbars, which are stacked from top to bottom. Each busbar includes a first flat wire core, and a vertical distance between two first flat wire cores of the busbars is less than or equal to 27 cm.

In an exemplary embodiment, there are at least two busbars, which are stacked from top to bottom. Each busbar includes a first flat wire core, and a vertical distance between two first flat wire cores is less than or equal to 7 cm.

In an exemplary embodiment, there are at least two busbars, which are stacked from top to bottom. Each busbar includes a first flat wire core, and an overlapping degree of two first flat wire cores in a stacking direction is 40% to 100%.

In an exemplary embodiment, the busbar includes a first flat wire core, a front end of which is connected to the flat terminal, and the male-end housing wraps at least part of the flat terminal.

In an exemplary embodiment, the busbar includes a first flat wire core which forms an integral structure with the flat terminal.

In an exemplary embodiment, at least part of the flat terminal protrudes from the male-end housing, or the male-end housing has an accommodating cavity and at least part of the flat terminal protrudes from a bottom surface of the accommodating cavity without exceeding the male-end housing.

In an exemplary embodiment, the busbar includes a first flat wire core, and a first bent portion with an angle of 0° to 180° is included between the first flat wire core and the flat terminal.

In an exemplary embodiment, at least part of the flat terminal is provided with a first transition layer.

In an exemplary embodiment, the first transition layer has a thickness of 0.3 µm to 3000 µm.

In an exemplary embodiment, the first transition layer has a thickness of 2.5 µm to 1000 µm.

In an exemplary embodiment, an end of the flat terminal is provided with a chamfer.

In an exemplary embodiment, the male-end connecting mechanism includes an interlocking connector, at least part of which is integrally injection-molded in the male-end housing.

In an exemplary embodiment, there are at least two double-busbars, which are stacked from top to bottom. The female-end housing is integrally injection-molded between at least parts of the double-busbars and/or at least parts of the clamping terminals, and/or is integrally injection-molded at outer peripheries of at least parts of the double-busbars and/or at least parts of the clamping terminals, to form an insulating structure.

In an exemplary embodiment, the double-busbar includes a second flat wire core, and a second outer insulating layer which is partially peeled off to expose the second flat wire core. An end of the second outer insulating layer is inside or abutted against the female-end housing.

In an exemplary embodiment, the double-busbar includes a second flat wire core which has a hardness of 8 HV to 105 HV.

In an exemplary embodiment, there are at least two double-busbars, which are stacked from top to bottom. Each double-busbar includes a second flat wire core, and a vertical distance between two second flat wire cores is less than or equal to 27 cm.

In an exemplary embodiment, there are at least two double-busbars, which are stacked from top to bottom. Each double-busbar includes a second flat wire core, and a vertical distance between two second flat wire cores is less than or equal to 7 cm.

In an exemplary embodiment, there are at least two double-busbars, which are stacked from top to bottom. Each double-busbar includes a second flat wire core, and an overlapping degree between two second flat wire cores in a stacking direction is 40% to 100%.

The double-busbar includes a second flat wire core, which includes two flat conductors overlapped with and connected to each other.

In an exemplary embodiment, the double-busbar includes a second flat wire core, a front end of which is connected to the clamping terminal, and the female-end housing wraps at least part of the clamping terminal.

In an exemplary embodiment, the double-busbar includes a second flat wire core which forms an integral structure with the clamping terminal.

In an exemplary embodiment, at least part of the clamping terminal protrudes from an outer wall of the female-end housing, or the female-end housing is provided with an open boss and at least part of the clamping terminal is disposed in the open boss.

In an exemplary embodiment, the double-busbar includes a second flat wire core, and a second bent portion with an angle of 0° to 180° is included between a front end of the second flat wire core and the clamping terminal.

In an exemplary embodiment, at least part of a surface of the clamping terminal is provided with a second transition layer.

In an exemplary embodiment, the second transition layer has a thickness of 0.3 µm to 3000 µm.

In an exemplary embodiment, the second transition layer has a thickness of 2.5 µm to 1000 µm.

In an exemplary embodiment, a front end of the clamping terminal is provided with an open groove, and a width of the groove on an open side thereof is greater than a width of the groove on a closed side thereof.

In an exemplary embodiment, the clamping terminal is sleeved by a clip, which is made of a memory alloy.

In an exemplary embodiment, a transition temperature of the memory alloy is in a range of 40°Cto 70°C; when a temperature of the clip is lower than the transition temperature, the clip is in an expanded state, and when the temperature of the clip is higher than the transition temperature, the clip is in a clamped state.

In an exemplary embodiment, the clamping terminal is sleeved by a clip, which includes a sidewall and an elastic elementfixed thereon, and the elastic element is connected to the clamping terminal.

In an exemplary embodiment, a pressure applied to the clamping terminal by the elastic element is 3 N to 200 N.

In an exemplary embodiment, the elastic element is an elastic rubber body, a spring or a metal elastic sheet.

In an exemplary embodiment, the female-end connecting mechanism includes a high-voltage interlocking structure, which is electrically connected to the interlocking connector to form a loop.

In an exemplary embodiment, the female-end connecting mechanism and/or the male-end connecting mechanism has a sealing structure.

In an exemplary embodiment, the sealing structure is secondarily injection-molded on the female-end housing and/or the male-end housing.

In an exemplary embodiment, the female-end connecting mechanism includes at least one temperature measuring structure for measuring a temperature of the double-busbar and/or the clamping terminal.

In an exemplary embodiment, the female-end connecting mechanism includes at least one temperature measuring structure, which is attached to the double-busbar and/or the clamping terminal to measure a temperature of the double-busbar and/or the clamping terminal.

In an exemplary embodiment, the female-end connecting mechanism includes at least one temperature measuring structure, there are at least two double-busbars, and the temperature measuring structure is located between the double-busbars to measure temperatures of the double-busbars.

In an exemplary embodiment, the male-end connecting mechanism includes at least one temperature measuring structure for measuring a temperature of the busbar and/or the flat terminal.

In an exemplary embodiment, the male-end connecting mechanism includes at least one temperature measuring structure, which is attached to the busbar and/or the flat terminal to measure a temperature of the busbar and/or the flat terminal.

In an exemplary embodiment, the male-end connecting mechanism includes at least one temperature measuring structure, there are at least two busbars, and the temperature measuring structure is located between the busbars to measure temperatures of the busbars.

In an exemplary embodiment, the male-end connecting mechanism and the female-end connecting mechanism are connected by one or more selected from adhesive connection, magnetic connection, bayonet connection, plugging connection, latching connection, binding connection, threaded connection, riveting connection and welding connection.

In an exemplary embodiment, a plugging force between the flat terminal and the clamping terminal is 3 N to 150 N.

In an exemplary embodiment, a plugging force between the flat terminal and the clamping terminal is 10 N to 130 N.

In an exemplary embodiment, a contact resistance between the flat terminal and the clamping terminal is less than 9 mΩ.

In an exemplary embodiment, a contact resistance between the flat terminal and the clamping terminal is less than 1 mΩ.

In an exemplary embodiment, the number of times of plugging and unplugging between the male-end connecting mechanism and the female-end connecting mechanism is greater than or equal to 9.

In an exemplary embodiment, the male-end connecting mechanism has a weight of less than or equal to 305 g.

In an exemplary embodiment, a height of the male-end connecting mechanism in a plugging-unplugging direction is less than or equal to 208 mm.

An electric energy transmission device, including the aforementioned busbar type connecting mechanism.

A motor vehicle, including the aforementioned busbar type connecting mechanism.

The present disclosure has the following characteristics and advantages:
1. The busbar type connecting mechanism of the present disclosure is provided with the injection-molded male-end housing and female-end housing, which are simple in processing and low in cost, and can be directly injected into the busbar for insulation, so that the mounting cost of the busbar can be reduced, and a front end of the busbar can be molded into various shapes as required, without considering the assembly, thereby saving the processing procedure and reducing the processing cost.
2. In the busbar type connecting mechanism of the present disclosure, the busbars are stacked at a proper interval to effectively reduce the electromagnetic interference to other parts after the busbars are electrified, thereby eliminating a shielding layer structure of the high-voltage charging harness and meeting the requirements of reducing the cost and weight.
3. In the connection between the flat terminal and the clamping terminal, the transition layer can reduce the electrochemical reaction between the flat terminal and the clamping terminal of the busbar, and solve the technical problem that the busbar is connectable to other terminals or electrical appliances only through copper terminals.
4. The busbar can be integrally formed with the flat terminal, and the double-busbar can be integrally formed with the clamping terminal. Through the connection between the flat terminal and the clamping terminal, the busbar and the double-busbar can realize the terminal function by themselves, thereby solving the problems of high cost and low efficiency due to the busbar and the double-busbar needing to be connected to other terminals, and realizing safe and rapid plugging and unplugging.
5. By adopting the clip to clamp and fix the clamping terminal, it is possible to increase the pressure applied by the clamping terminal to the flat terminal, and avoid the problems that due to long-time use, the clamping force on the clamping terminal is reduced, the contact resistance between the clamping terminal and the flat terminal is increased, the conduction current is increased, and the temperatures of the clamping terminal and the flat terminal are increased, which may cause burning accidents in severe cases.
6. The clip has a memory function. The clip is generally in an expanded state when its temperate is below the transition temperature, so that at this time, the flat terminal of the busbar can be plugged with the clamping terminal without requiring an insertion force, and an operator can easily plug the electrical appliance. During operation, current is conducted to the clamping terminal, and the temperatures of the clamping terminal and the clip gradually increase due to the effect of the resistance. When the temperature rises above the transition temperature, the clip will contract radially, so that the contact area and the contact force between the clamping terminal and the flat terminal can be increased by the temperature rise, and the contact reliability can be improved. Since the insertion force is not required, the work is easier and the working efficiency is improved.
7. The embedded high-voltage interlocking structure replaces the previous assembled high-voltage interlocking, and is fixed in the connecting mechanism by integral injection-molding without assembling, so that the cost is reduced and the high-voltage interlocking effect is completely satisfied.
8. The sealing structure of the connecting mechanism is no longer a separate sealing ring, and is a secondarily injection-molded sealing structure that replaces the traditional sealing ring, so as to be directly molded on the connecting mechanism, and achieve a better injection bonding and a lower cost.
9. By adopting the temperature measuring structure, it is possible to separately monitor the terminal temperature inside the connecting mechanism, and avoid the situation that the temperature of the connecting mechanism cannot be monitored due to the damage of the temperature sensors in other positions.

### BRIEF DESCRIPTION OF DRAWINGS

For a clearer illustration of technical features in the present disclosure, a brief description of the drawings for the embodiments of the present disclosure will be given below. Obviously, the drawings described below involve only some embodiments of this disclosure. For those of ordinary skill in the art, other drawings can be derived from these drawings without any inventive efforts.
FIG. 1 illustrates a structural diagram of a busbar type connecting mechanism according to the present disclosure.
FIG. 2 illustrates a cross-sectional view of a busbar and a double-busbar that are connected to each other according to the present disclosure.
FIG. 3 illustrates a structural diagram of a busbar and a double-busbar that are connected to each other according to the present disclosure.
FIG. 4 illustrates a structural diagram of a male-end connecting mechanism according to the present disclosure.
FIG. 5 illustrates a structural diagram of a busbar according to the present disclosure.
FIG. 6 illustrates a structural diagram of a male-end connecting mechanism according to the present disclosure.
FIG. 7 illustrates a structural diagram of a double-busbar according to the present disclosure.
FIG. 8 illustrates a structural diagram of a clip according to the present disclosure.
FIG. 9 illustrates a structural diagram of an interlocking connector according to the present disclosure.
FIG. 10 illustrates a structural diagram of a high-voltage interlocking structure according to the present disclosure.
FIG. 11 illustrates a structural diagram of a magnetic field of a busbar and a double-busbar according to the present disclosure.
FIG. 12 illustrates a structural diagram of a magnetic field of a busbar and a double-busbar according to the present disclosure.
FIG. 13 illustrates a cross-sectional view of a busbar type connecting mechanism in direction A in FIG. 1 according to the present disclosure.

In the drawings,
10: male-end connecting mechanism; 11: busbar; 12: male-end housing; 111: first outer insulating layer; 112: first flat wire core; 113: flat terminal; 1131: first bent portion; 13: interlocking connector;
20: female-end connecting mechanism; 21: double-busbar; 22: female-end housing; 211: second outer insulating layer; 212: second flat wire core; 213: clamping terminal; 2131: second bent portion; 214: flat conductor; 23: high-voltage interlocking structure;
30: clip; 31: sidewall; 32: elastic element;
40: sealing structure.

### DETAILED DESCRIPTION OF EMBODIMENTS

A clear and complete description of the embodiments of the present disclosure will be set forth with reference to the drawings.

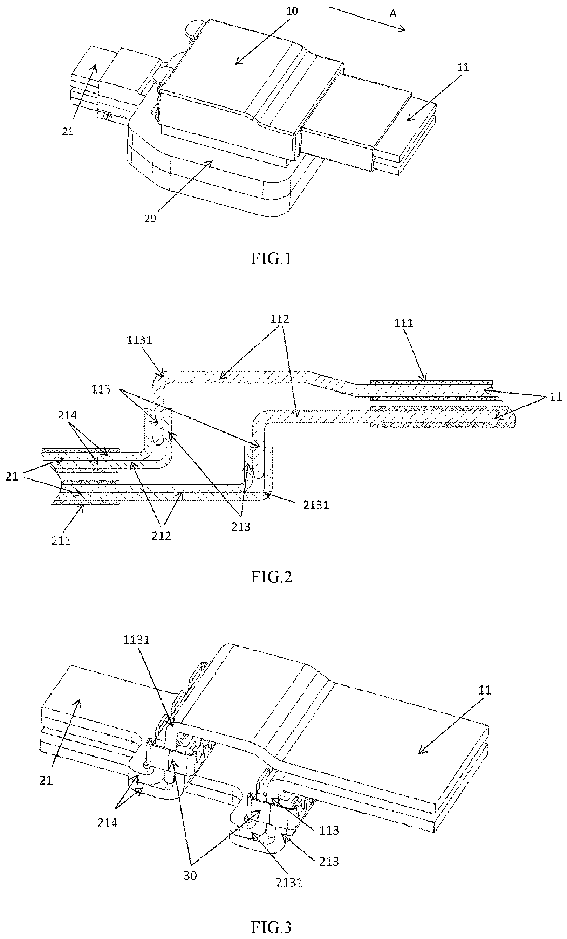

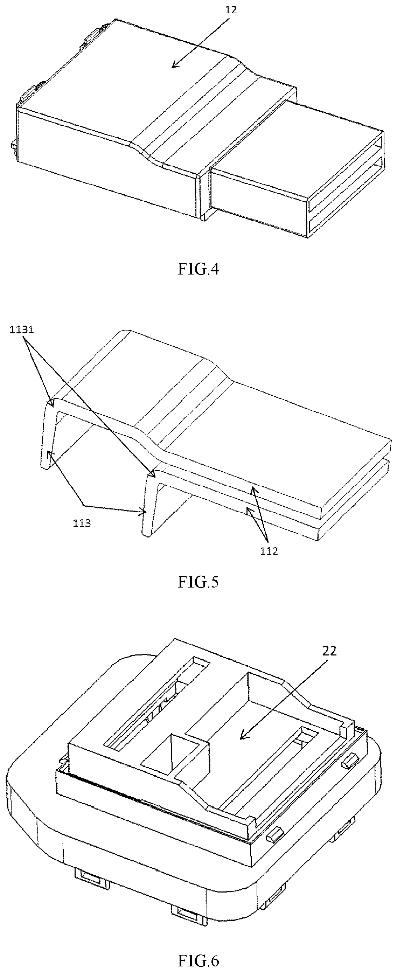

In an embodiment, a busbar type connecting mechanism includes a male-end connecting mechanism 10 and a female-end connecting mechanism 20. The male-end connecting mechanism 10 includes a busbar 11, a flat terminal 113 and a male-end housing 12 connected to the busbar 11 and the flat terminal 113. The female-end connecting mechanism 20 includes a double-busbar 21, a clamping terminal 213 and a female-end housing 22 connected to the double-busbar 21 and the clamping terminal 213. The male-end connecting mechanism 10 and the female-end connecting mechanism 20 are electrically connected to each other through the clamping terminal 213 and the flat terminal 113, and the male-end housing 12 and the female-end housing 22 are assembled and connected to each other, to form the busbar type connecting mechanism, as illustrated in FIGS. 1 to 6.

The busbars are stacked at a proper interval to effectively reduce the electromagnetic interference to other parts after the busbars are electrified, thereby eliminating a shielding layer structure for a high-voltage charging harness and reducing the cost and weight.

Further, the busbar 11 or the double-busbar 21 has great advantages in heat dissipation and assembly. Since an electrically-conductive part of the busbar 11 or the double-busbar 21 has a large width to height ratio, i.e., the electrically-conductive part has a large plane in contact with the external environment, it is possible to effectively dissipate heat, quickly reduce the temperature rise of the cable caused by current, and prolong the service life of the cable. In addition, when the height of a mounting environment is insufficient for cable assembly, the busbar 11 or the double-busbar 21 can be used to reduce the cable laying height, so that the cable can be effectively assembled tightly in contact with the mounting environment, thereby reducing the demand for the mounting space and improving the space utilization rate.

In some embodiments, the flat terminal 113 and the clamping terminal 213 are made of metal conductive materials including one or more selected from the group consisting of nickel, cadmium, zirconium, chromium, cobalt, manganese, aluminum, tin, titanium, zinc, copper, silver, gold, phosphorus, tellurium, beryllium and lead, which are stable in properties and good in electrical conductivity, and the exemplary materials are those including copper or copper alloy or aluminum or aluminum alloy.

In some embodiments, the materials of the electrically-conductive parts of the busbar 11 and the double-busbar 21 include one or more selected from the group consisting of aluminum, phosphorus, tin, copper, iron, manganese, chromium, titanium and lithium. The materials of the electrically-conductive parts of the busbar 11 and the double-busbar 21 include aluminum or aluminum alloy, which is one of the main means for energy saving and cost reduction recently. In the field of electrical connections, the copper conductor is usually used for current conduction since copper has high electrical conductivity and good ductility. However, due to the increasing price of copper, the material cost of the conductor made of copper is higher and higher. To this end, people begin to look for alternatives to copper to reduce the cost. The content of metallic aluminum in the earth's crust is about 7.73%, the price of the metallic aluminium is relatively low due to the optimization of the refining technology of metallic aluminum, and aluminum is light in weight compared with copper and is second only to copper in conductivity, so that aluminum can replace some copper in the field of electrical connection. Therefore, replacing copper with aluminum is a development trend in the field of electrical connections of automobiles. In an embodiment, the busbar 11 has a cross-section with an aspect ratio of 1: 1 to 120:1.

In order to verify the influence of the aspect ratio of the cross-section of the busbar 11 on the temperature rise and the tensile strength of the busbar 11, the inventor selects the samples of the busbars 11 with the same cross-sectional area and different aspect ratios to test the temperature rise and the tensile strength of the busbar 11, and the test results are shown in Table 1.

The method for testing the temperature rise of the busbar 11 is to apply the same current to the busbars 11, detect the temperatures of the same position of each busbar 11 before the current apply and after the temperature is stable in a closed environment, and take a difference between the temperatures to obtain an absolute value. In this embodiment, if the temperature rise is greater than 50K, it is considered as unqualified.

The method for testing the tensile strength of the busbar 11 is to adopt a universal tensile tester, fix both ends of the sample of the busbar 11 on a tensile fixture of the universal tensile tester, stretch the sample by the universal tensile tester at a speed of 50 mm/min, and record a tensile value when the sample is finally broken. In this embodiment, if the tensile value is greater than 1600 N, it is considered as unqualified.

**Table 1: Influence of the aspect ratio of the cross-section of the busbar 11 on the temperature rise and the tensile strength of the busbar 11**

| Different aspect ratios of the cross-section of the busbar 11 | | | | | | | | | | | | | |
|---|---|---|---|---|---|---|---|---|---|---|---|---|---|
| 0.6:1 | 0.8:1 | 1:1 | 5:1 | 10:1 | 20:1 | 40:1 | 60:1 | 80:1 | 100:1 | 110:1 | 120:1 | 130:1 | 140:1 |

| Temperature rise of the busbar 11 (K) | | | | | | | | | | | | | |
|---|---|---|---|---|---|---|---|---|---|---|---|---|---|
| 54 | 52 | 49 | 47 | 44 | 42 | 39 | 37 | 33 | 31 | 28 | 26 | 22 | 18 |

| Tensile strength of the busbar 11 (N) | | | | | | | | | | | | | |
|---|---|---|---|---|---|---|---|---|---|---|---|---|---|
| 1978 | 2006 | 2035 | 1998 | 1963 | 1931 | 1863 | 1798 | 1733 | 1673 | 1638 | 1611 | 1589 | 1567 |

As can be seen from Table 1, when the aspect ratio of the cross-section of the busbar 11 is less than 1:1, the temperature rise of the busbar 11 is greater than 50 Kelvin (K), which is unqualified. When the aspect ratio of the cross-section of the busbar 11 is greater than or equal to 1:1, the temperature rise of the busbar 11 is less than 50 K, which is qualified, and the state is getting better; this is because the larger the aspect ratio of the cross-section of the busbar 11 is, the larger the heat dissipation area of the busbar 11 is, and the busbar 11 with a better heat dissipation has a lower temperature rise. When the aspect ratio of the cross-section of the busbar 11 is greater than 120:1, the busbar 11 is too thin and will be broken under a large tensile force, and the tensile strength thereof does not meet the qualified value. Therefore, the inventor sets the aspect ratio of the cross-section of the busbar 11 to be 1:1 to 120:1.

In an embodiment, the double-busbar 21 has a cross-section with an aspect ratio of 1:1 to 120:1.

In order to verify the influence of the aspect ratio of the cross-section of the double-busbar 21 on the temperature rise and the tensile strength of the double-busbar 21, the inventor selects the samples of the double-busbars 21 with the same cross-sectional area and with different aspect ratios to test the temperature rise and the tensile strength of the double-busbar 21, and the test results are shown in Table 2.

The method for testing the temperature rise of the double-busbar 21 is to apply the same current to the double-busbar 21, detect the temperatures of the same position of each double-busbar 21 before the current apply and after the temperature is stable in a closed environment, and take a difference between the temperatures to obtain an absolute value. In this embodiment, if the temperature rise is greater than 50K, it is considered as unqualified.

The method for testing the tensile strength of the double-busbar 21 is to adopt a universal tensile tester, fix both ends of the sample of the double-busbar 21 on a tensile fixture of the universal tensile tester, stretch the sample by the universal tensile tester at a speed of 50 mm/min, and record a tensile value when the sample is finally broken. In this embodiment, if the tensile value is greater than 1600 N, it is considered as unqualified.

**Table 2: Influence of the aspect ratio of the cross-section of the double-busbar 21 on the temperature rise and the tensile strength of the double-busbar 21**

| Different aspect ratios of the cross-section of the double-busbar 21 | | | | | | | | | | | | | |
|---|---|---|---|---|---|---|---|---|---|---|---|---|---|
| 0.6:1 | 0.8:1 | 1:1 | 5:1 | 10:1 | 20:1 | 40:1 | 60:1 | 80:1 | 100:1 | 110:1 | 120:1 | 130:1 | 140:1 |

| Temperature rise of the double-busbar 21 (K) | | | | | | | | | | | | | |
|---|---|---|---|---|---|---|---|---|---|---|---|---|---|
| 55 | 51 | 48 | 47 | 45 | 42 | 39 | 36 | 33 | 31 | 28 | 25 | 22 | 18 |

| Tensile strength of the double-busbar 21 (N) | | | | | | | | | | | | | |
|---|---|---|---|---|---|---|---|---|---|---|---|---|---|
| 1979 | 2004 | 2034 | 1998 | 1965 | 1931 | 1862 | 1798 | 1733 | 1672 | 1637 | 1611 | 1583 | 1567 |

As can be seen from Table 2, when the aspect ratio of the cross-section of the double-busbar 21 is less than 1: 1, the temperature rise of the double-busbar 21 is greater than 50 K, which is unqualified. When the aspect ratio of the cross-section of the double-busbar 21 is greater than or equal to 1:1, the temperature rise of the double-busbar 21 is less than 50 K, which is qualified, and the state is getting better; this is because the larger the aspect ratio of the cross-section of the double-busbar 21 is, the larger the heat dissipation area of the double-busbar 21 is, and the double-busbar 21 with a better heat dissipation has a lower temperature rise. When the aspect ratio of the cross-section of the double-busbar 21 is greater than 120:1, the double-busbar 21 is too thin and will be broken under a large tensile force, and the tensile strength thereof does not meet the qualified value. Therefore, the inventor sets the aspect ratio of the cross-section of the double-busbar 21 to be 1:1 to 120:1.

In an embodiment, as illustrated in FIG. 3, there are at least two of the busbars, which are stacked from top to bottom. The male-end housing is integrally injection-molded between at least parts of the busbars and/or at least parts of the flat terminals, and/or is integrally injection-molded at outer peripheries of at least parts of the busbars and/or at least parts of the flat terminals, to form an insulating structure.

Generally, an electrically-conductive loop is composed of two loops. For example, in a DC charging stand, there are a DC positive charging cable and a DC negative charging cable, and in an AC charging stand, there are an AC live charging cable and an AC neutral charging cable. The busbars 11 are stacked from top to bottom, which can effectively utilize the assembly space, and the electromagnetic interference generated by the busbars 11 cancel out each other. After two busbars 11 are stacked one above the other, the raw material of the male-end housing 12 is injected between at least parts of the busbars 11 and/or at least parts of the flat terminal 113 and injected to outer peripheries of at least parts of the busbars 11 and/or at least parts of the flat terminals 11 by an injection mold, to form the male-end housing 12, thereby achieving a good insulative protection for the busbar 11 and the flat terminal 113.

In some embodiments, when there are many loops to be connected, the number of the busbars 11 may also be three, four or more to connect different loops.

In this embodiment, the busbar type connecting mechanism is provided with the injection-molded male-end housing 12, which is simple in processing and low in cost, and can be directly injected into the busbar 11 or the double-busbar 21 for insulation, so that the mounting cost of the busbar 11 or the double-busbar 21 can be reduced. In addition, a front end of the busbar 11 or the double-busbar 21 can be molded into various shapes as required, without considering the assembly, thereby saving the processing procedures and reducing the processing cost.

In an embodiment, as illustrated in FIG. 2, the busbar 11 includes a first outer insulating layer 111 and a first flat wire core 112. The first outer insulating layer 111 is partially peeled off to expose the first flat wire core 112, and an end of the first outer insulating layer 111 is located in or abutted against the male-end housing 12. The first flat wire core 112 is the electrically-conductive part of the busbar 11, and the first outer insulating layer 111 is the insulating part of the busbar 11. Before the injection-molding of the male-end housing 12, it is necessary to peel off a part of the first outer insulating layer 111 of the busbar 11 to expose the first flat wire core 112 inside the first outer insulating layer 111, and then carry out the connection with the flat terminal 113 and the integral injection-molding with the male-end housing 12.

In an embodiment, there are at least two of the busbars 11, which are stacked from top to bottom. Each busbar 11 includes a first flat wire core 112, and a vertical distance between two first flat wire cores 112 is less than or equal to 27 cm.

Further, there are at least two of the busbars 11, which are stacked from top to bottom. Each busbar 11 includes a first flat wire core 112, and a vertical distance between two first flat wire cores 112 is less than or equal to 7 cm.

When being electrified, the busbar 11 generates an induced magnetic field which will cause an electromagnetic interference to the outside. In the prior art, the usual solution is to dispose an electromagnetic shielding layer outside the busbar 11. In order to eliminate the shielding structure to reduce the cost and weight, the present disclosure adopts a design in which the electric energy transmission system for automobiles includes two stacked busbars 11.

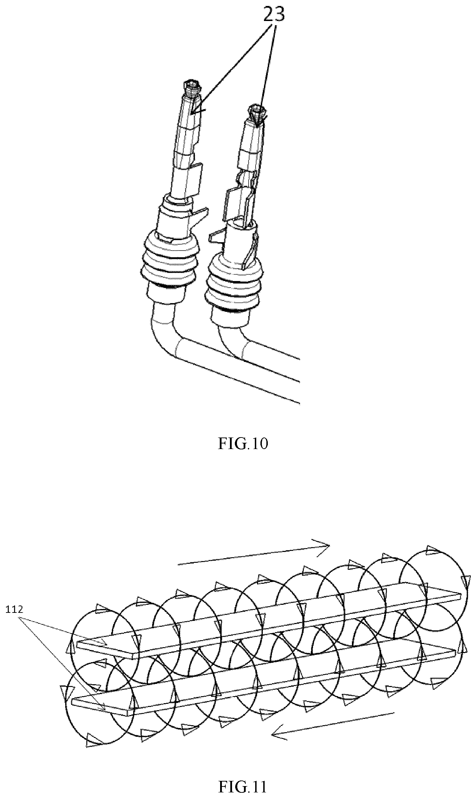

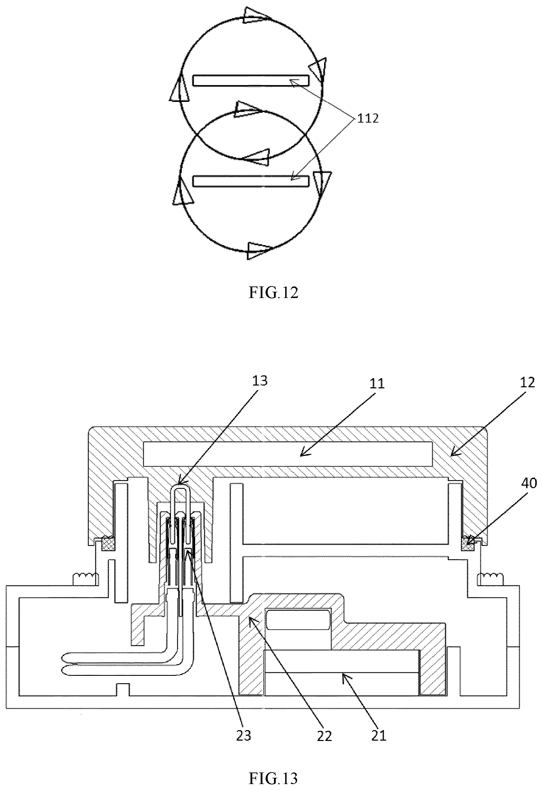

When the two busbars 11 are stacked one above the other, the generated magnetic fields are as illustrated in FIGS. 11 and 12. Since the first flat wire core 112 is a flat structure, its magnetic field is strongest at its portion with the largest area, so that the magnetic fields generated by the two first flat wire core 112 can be cancelled out each other by stacking the two first flat wire core 112 (since the currents in the two first flat wire cores 112 have the same magnitude and opposite directions, the induced magnetic fields also have the same intensity and opposite directions), thereby eliminating the electromagnetic interference to other electrical appliances when the first flat wire cores 112 are electrified.

Exemplarily, width directions of the two busbars 11 are parallel to each other. The busbars 11 are mirror images of each other, with a distance H between the two first flat wire cores 112. A stacking direction of the two busbars 11 is a vertical direction illustrated in FIGS. 11 and 12.

When the two busbars 11 have an overlapping degree of 100% in the stacking direction, the influence of the distance H between the first flat wire cores 112 on the cancellation of the magnetic fields is shown in Table 3. The percentage of magnetic field cancellation being greater than 30% is considered to be qualified.

**Table 3: Influence of the distance H between the two first flat wire cores 112 on the magnetic field cancellation when the stacked busbars 11 have an overlapping of 100%**

| Distance between the first flat wire cores 112 (H) | Percentage of magnetic field cancellation | | | | |
|---|---|---|---|---|---|
| | Sample 1 | Sample 2 | Sample 3 | Sample 4 | Sample 5 |
| 30cm | 0.0% | 0.0% | 0.0% | 0.0% | 0.0% |
| 29cm | 11.1% | 11.1% | 11.3% | 10.9% | 11.2% |
| 28cm | 19.2% | 22.7% | 25.2% | 25.4% | 24.6% |
| 27cm | 31.6% | 32.3% | 31.1% | 30.8% | 30.7% |
| 25cm | 40.7% | 42.2% | 42.6% | 41.7% | 40.3% |
| 23cm | 51.4% | 50.2% | 52.2% | 53.3% | 51.2% |
| 21cm | 59.3% | 56.1% | 58.6% | 59.3% | 61.2% |
| 19cm | 70.4% | 68.4% | 69.1% | 68.1% | 70.2% |
| 17cm | 75.9% | 76.3% | 77.1% | 75.9% | 77.2% |
| 15cm | 80.4% | 81.1% | 79.1% | 81.3% | 80.2% |
| 13cm | 86.6% | 86.7% | 89.4% | 84.8% | 82.9% |
| 11cm | 90.9% | 89.6% | 91.2% | 90.4% | 90.5% |
| 9cm | 90.8% | 91.0% | 93.0% | 93.1% | 92.9% |
| 7cm | 99.9% | 100.0% | 100.0% | 100.0% | 100.0% |
| 5cm | 100.0% | 99.80% | 100.0% | 100.0% | 99.7% |
| 3cm | 100.0% | 100.0% | 100.0% | 99.9% | 100.0% |
| 2cm | 100.0% | 99.9% | 100.0% | 99.9% | 100.0% |
| 1cm | 99.8% | 99.9% | 100.0% | 99.9% | 100.0% |

The overlapping degree means the percentage of an overlapping area of two busbars 11 in the stacking direction to an area of one busbar 11.

As can be seen from Table 3, when the overlapping degree of the two busbars 11 in the stacking direction is 100% and the distance H between the two first flat wire cores 112 is less than or equal to 27 cm, the percentage of magnetic field cancellation is qualified, which is effective in preventing electromagnetic interference. Exemplarily, when the vertical distance between the two first flat wire cores 112 is less than or equal to 7 cm, the magnetic fields can be effectively cancelled out by each other and the effect is obvious, so that the distance H between the two first flat wire cores 112 is further set to be less than or equal to 7 cm.

In the busbar type connecting mechanism of this embodiment, the busbars 11 are stacked from top to bottom, which can effectively reduce the electromagnetic interference to other parts after the busbars 11 are electrified, thereby eliminating the shielding layer structure of the high-voltage charging harness, and reducing the cost and weight.

In an embodiment, there are at least two of the busbars 11, which are stacked from top to bottom. Each busbars 11 includes a first flat wire core 112, and an overlapping degree of the two first flat wire cores 112 in a stacking direction is 40% to 100%.

When the busbars 11 are stacked from top to bottom, since each busbar 11 is a flat structure, its magnetic field is strongest at its portion with the largest area, so that by stacking the busbar 11, the magnetic fields generated by the positive and negative charging busbars 11 can be cancelled out each other, thereby eliminating the electromagnetic interference to other electrical appliances when the busbars 11 are electrified.

The distance between the busbars 11 and the overlapping degree thereof have great influences on the degree of magnetic field cancellation. The present disclosure effectively cancels the magnetic fields of the busbars 11 by the stacked design of the two busbars 11 and the control of the distance therebetween and the overlapping degree thereof.

When the distance between the first flat wire cores 112 of the two busbars 11 is 7 cm, the influence of the overlapping degree of the two busbars 11 in the stacking direction on the magnetic field cancellation is shown in Table 4. The percentage of magnetic field cancellation greater than 30% is considered to be qualified.

**Table 4: Influence of the overlapping area of the stacked busbars 11 on the magnetic field cancellation when the distance between the two first flat wire cores 112 is 7 cm**

| Overlapping area of the stacked busbars (A) | Percentage of magnetic field cancellation | | | | |
|---|---|---|---|---|---|
| | Sample 1 | Sample 2 | Sample 3 | Sample 4 | Sample 5 |
| 0% | 0.0% | 0.0% | 0.0% | 0.0% | 0.0% |
| 10% | 12.1% | 12.2% | 11.8% | 12.0% | 11.9% |
| 30% | 20.5% | 20.8% | 21.5% | 22.6% | 22.3% |
| 40% | 31.1% | 30.8% | 31.1% | 31.3% | 32.1% |
| 50% | 45.8% | 43.6% | 46.9% | 48.3% | 43.6% |
| 70% | 49.9% | 50.3% | 50.8% | 51.2% | 49.8% |
| 90% | 60.8% | 61.7% | 63.1% | 61.6% | 61.1% |
| 95% | 83.1% | 80.1% | 80.9% | 81.8% | 82.8% |
| 98% | 98.4% | 97.8% | 98.2% | 97.6% | 99.1% |
| 100% | 99.8% | 100.0% | 100.0% | 100.0% | 99.9% |

As can be seen from Table 4, when the distance between the two first flat wire cores 112 is 7 cm, the overlapping degree of the busbars 11 in the stacking direction is 40% to 100%, and the percentage of magnetic field cancellation is qualified, which is effective in preventing electromagnetic interference. The effect is obvious when the overlapping degree of the two first busbars 11 in the stacking direction is greater than 90%, and the effect is the best when the overlapping degree is 100%.

In an embodiment, as illustrated in FIGS. 1 to 5, the busbar 11 includes a first flat wire core 112 and a first outer insulating layer 111, a front end of the first flat wire core 112 is connected to the flat terminal 113, and the male-end housing 12 wraps at least part of the flat terminal 113. The first outer insulating layer 111 of the busbar 11 is peeled off to expose the first flat wire core 112 that is connected to the flat terminal 113. The flat terminal 113, is provided to be effectively plugged with the clamping terminal 213, so as to achieve an effective electrical connection of the busbar type connecting mechanism.

In order to make an effective plugging connection between the flat terminal 113 and the clamping terminal 213, the flat terminal 113 needs to be exposed outside the male-end housing 12 during the integral molding of the busbar 11 and the male-end housing 12, so as to prevent the failure of the plugging connection between the flat terminal 113 and the clamping terminal 213 due to the covering of the male-end housing 12.

Further, the front end of the first flat wire core 112 is connected to the flat terminal 113 by one or more selected from the group consisting of resistance welding, friction welding, ultrasonic welding, arc welding, laser welding, electron beam welding, pressure welding, diffusion welding, screwing, clamping, splicing and crimping.

The resistance welding refers to a method of welding by passing strong current through a contact point that is between an electrode and a workpiece, to generate heat by a contact resistance. The front end of the first flat wire core 112 and the flat terminal 113 may be welded by the resistance welding.

The friction welding refers to a method of welding by using the heat generated by the friction between the contact surfaces of the workpieces as a heat source, to make the workpieces be plastically deformed under pressure. The front end of the first flat wire core 112 and the flat terminal 113 may be welded by the friction welding.

The ultrasonic welding is to transmit high-frequency vibration waves to surfaces of two to-be-welded objects, so that the surfaces of the two objects rub against each other under pressure to form a fuse molecular layer. The front end of the first flat wire core 112 and the flat terminal 113 may be welded by the ultrasonic welding.

The arc welding is to convert electric energy into heat energy and mechanical energy that are needed for welding by using electric arc as a heat source and using the physical phenomenon of air discharge, so as to connect metals. The arc welding mainly includes shielded metal arc welding, submerged arc welding and gas shielded welding, etc.

The laser welding is an efficient and precise welding method that uses a laser beam with high energy density as a heat source.

The electron beam welding method refers to a method of using accelerated and focused electron beam to bombard the welding surface that is placed in vacuum or non-vacuum, to melt the welded workpiece to achieve welding.

The pressure welding method is a method of applying pressure to weldments to make binding surfaces of them be in close contact and generate a certain plastic deformation to complete the welding.

The diffusion welding refers to a solid-state welding method that pressurizes the workpiece at high temperature without producing visible deformation and relative movement.

The magnetic induction welding refers to that that two to-be-welded workpieces are instantaneously collided with each other at high speed under the action of a strong pulsed magnetic field, so that under the action of high pressure waves, the atoms of the two materials on the material surfaces of the two workpieces can meet within interatomic distance, thus forming a stable metallurgical bond at the interface. The magnetic induction welding is a type of solid-state cold welding that can weld conductive metals with similar or dissimilar properties.

The screwing refers to a threaded connection, which is a detachable connection in which a threaded piece (or the threaded part of a piece to be connected) is used to connect the pieces to be connected into a whole. The conventional threaded connecting pieces include a bolt, a stud, a screw, a set screw, etc., mostly of which are standard parts.

The clamping means that a claw and a slot corresponding to each other are provided on connecting ends or connecting surfaces, respectively, and the slot and the claw are connected together to connect the connecting ends or the connecting surfaces. The clamping has the advantages of quick connection and detachability.

The splicing means that a groove and a protrusion corresponding to each other are provided on connecting ends or connecting surfaces, respectively, and the groove and the protrusion are connected together by means of tenoning or splicing to connect the connecting ends or the connecting surfaces. The splicing mode has the advantages of stable connection and detachability.

The crimping is a production process in which the front end of the first flat wire core 112 and the flat terminal 113 are assembled and then are stamped into a whole by using a crimping machine. The crimping has the advantage of mass production, and by adopting an automatic crimping machine, products with a stable quality can be rapidly manufactured in large quantities.

In an embodiment, the busbar 11 includes a first flat wire core 112 which forms an integral structure with the flat terminal 113. The first flat wire core 112 and the flat terminal 113 may be made of the same material, or the front end of the first flat wire core 112 is directly molded as the flat terminal 113, thereby saving the use of the flat terminal 113, reducing the material cost and the processing time, and molding the front end of the first flat wire core 112 into various shapes as required without considering the assembly.

In an embodiment, at least part of the flat terminal 113 protrudes from the male-end housing 12, or the male-end housing 12 has an accommodating cavity and at least part of the flat terminal 113 protrudes from a bottom surface of the accommodating cavity without exceeding the male-end housing 12. At least part of the flat terminal 113 protrudes beyond the male-end housing 12 and may be directly in a plugging connection with the clamping terminal 213 in the female-end housing 22; or the least part of the flat terminal 113 is disposed in the accommodating cavity of the male-end housing 12, and the clamping terminal 213 in the female-end housing 22 is inserted into the accommodating cavity to be plugged with the flat terminal 113, thereby achieving safe and quick plugging and unplugging.

In an embodiment, as illustrated in FIGS. 2 and 3, the busbar 11 includes a first flat wire core 112, and a first bent portion 1131 with an angle of 0° to 180° is included between the first flat wire core 112 and the flat terminal 113. The first bent portion 1131 may be provided with different bending angles to adapt to the connecting mechanisms with different shapes and different directions of the first flat wire core 112 and the plugging terminal 23. According to the mounting environment and the needs of simplifying the structure of the connecting mechanism and reducing the connecting space, the designer may set different bending angles of the first bent portions 1131 to enable the flat terminals 113 to be connected to the clamping terminals 213 with different angles, thereby changing the cable routings at both sides of the connecting mechanism. In addition, the first flat wire core 112 is connected to the flat terminal 113 through the first bent portion 1131, and the extending direction of the first flat wire core 112 is adjusted by the first bent portion 1131, so that the busbar 11 can be adaptive to the mounting environment.

In this embodiment, the busbar 11 also has the advantage of being convenient for bending and shaping, that is, the busbar 11 can keep its shape after being bent, so as to be arranged along with the sheet metal of the vehicle body, and bent and shaped at different positions as required, thereby saving the space and facilitating the fixation.

In an embodiment, at least part of the flat terminal 113 is provided with a first transition layer. When the flat terminal 113 and the clamping terminal 213 are made of different materials, the electrical conduction therebetween will cause an electrochemical corrosion due to a potential difference, thereby reducing the service lives of the flat terminal 113 and the clamping terminal 213. In order to reduce the electrochemical corrosion, the flat terminal 113 may be provided with a first transition layer which may be made of a metal material with a potential between those of the materials of the flat terminal 113 and the clamping terminal 213, thereby isolating the flat terminal 113 and the clamping terminal 213, reducing the electrochemical corrosion therebetween, and prolonging the service lives thereof.

Further, the first transition layer is attached to at least part of the surface of the flat terminal 113 by one or more selected from the group consisting of electroplating, chemical plating, magnetron sputtering, vacuum plating, pressure welding, diffusion welding, friction welding, resistance welding, ultrasonic welding or laser welding.

The electroplating is a process of plating, on a surface of some metal, a thin layer of other metal or alloy using electrolysis principle.

The chemical plating is a deposition process that produces a metal through a controllable oxidation-reduction reaction under a metal catalytic action.

The magnetron sputtering is to use an interaction of a magnetic field and an electric field to make electrons move spirally near a target surface, thereby increasing the probability that electrons bombard argon to generate ions. The generated ions bombard the target surface under the action of the electric field so as to sputter a target material.

The vacuum plating is to deposit various metal and non-metal films on the surface of a part by means of distillation or sputtering under a vacuum condition.

The pressure welding method is a method of applying pressure to weldments to make binding surfaces of them be in close contact and generate a certain plastic deformation to complete the welding.

The friction welding refers to a method of welding by using the heat generated by the friction between the contact surfaces of the workpieces as a heat source, to make the workpieces be plastically deformed under pressure.

The resistance welding refers to a method of welding by passing strong current through a contact point that is between an electrode and a workpiece, to generate heat by a contact resistance.

The ultrasonic welding is to transmit high-frequency vibration waves to surfaces of two to-be-welded objects, so that the surfaces of the two objects rub against each other under pressure to form a fuse molecular layer.

The laser welding is an efficient and precise welding method that uses a laser beam with high energy density as a heat source.

The diffusion welding refers to a solid-state welding method that pressurizes the workpiece at high temperature without producing visible deformation and relative movement.

The first transition layer can be stably disposed on the surface of the flat terminal 113 by adopting one or combinations of the above modes.

In an embodiment, the first transition layer has a thickness of 0.3 µm to 3000 µm.

In an embodiment, the first transition layer has a thickness of 2.5 µm to 1000 µm.

In order to test the influence of different thicknesses of the first transition layer on a voltage drop, the inventor adopts the flat terminals 113 with the same material and the same structure, disposes the first transition layers with different thicknesses on the flat terminal 113, respectively while the clamping terminal 213 is not provided with any transition layer, and then tests the voltage drop after the flat terminal 113 and the clamping terminal 213 are plugged with each other.

In this embodiment, it is unqualified if the voltage drop tested after the flat terminal 113 and the clamping terminal 213 are plugged with each other is greater than 4 mV.

**Table 5: Influence of different thicknesses of the first transition layer on the voltage drop (mV)**

| Thicknesses of the first transition layer (µm) | | | | | | | | | | | | | | | |
|---|---|---|---|---|---|---|---|---|---|---|---|---|---|---|---|
| | 0.2 | 0.3 | 1 | 2.5 | 5 | 10 | 50 | 100 | 300 | 500 | 800 | 1000 | 2000 | 3000 | 4000 |

| Serial No. | Voltage drop after plugging (mV) | | | | | | | | | | | | | | |
|---|---|---|---|---|---|---|---|---|---|---|---|---|---|---|---|
| 1 | 4.1 | 3.4 | 3.3 | 3.1 | 3.2 | 3.4 | 3.5 | 3.6 | 3.6 | 3.7 | 3.8 | 3.8 | 3.8 | 3.8 | 4.1 |
| 2 | 4.0 | 3.5 | 3.3 | 3.2 | 3.3 | 3.5 | 3.6 | 3.5 | 3.6 | 3.6 | 3.7 | 3.8 | 3.9 | 3.9 | 4.1 |
| 3 | 4.2 | 3.4 | 3.2 | 3.1 | 3.2 | 3.4 | 3.5 | 3.7 | 3.5 | 3.7 | 3.8 | 3.8 | 3.8 | 3.8 | 4.0 |
| 4 | 4.1 | 3.5 | 3.4 | 3.1 | 3.1 | 3.4 | 3.6 | 3.6 | 3.7 | 3.7 | 3.8 | 3.8 | 3.8 | 3.9 | 4.1 |
| 5 | 4.2 | 3.4 | 3.3 | 3.2 | 3.2 | 3.5 | 3.5 | 3.6 | 3.7 | 3.8 | 3.8 | 3.8 | 3.8 | 3.8 | 4.2 |
| 6 | 4.0 | 3.4 | 3.2 | 3.1 | 3.3 | 3.4 | 3.5 | 3.6 | 3.6 | 3.7 | 3.7 | 3.7 | 3.7 | 3.9 | 4.2 |
| 7 | 4.2 | 3.6 | 3.3 | 3.1 | 3.2 | 3.6 | 3.4 | 3.6 | 3.6 | 3.7 | 3.8 | 3.8 | 3.8 | 3.8 | 4.0 |
| 8 | 4.1 | 3.4 | 3.4 | 3.1 | 3.3 | 3.4 | 3.5 | 3.7 | 3.7 | 3.8 | 3.7 | 3.7 | 3.9 | 3.9 | 4.1 |
| 9 | 4.2 | 3.4 | 3.2 | 3.2 | 3.3 | 3.3 | 3.5 | 3.6 | 3.6 | 3.7 | 3.7 | 3.8 | 3.8 | 3.9 | 4.2 |
| 10 | 4.2 | 3.5 | 3.3 | 3.1 | 3.3 | 3.4 | 3.6 | 3.6 | 3.8 | 3.7 | 3.7 | 3.7 | 3.9 | 3.9 | 4.1 |
| Average value | 4.13 | 3.45 | 3.29 | 3.13 | 3.24 | 3.42 | 3.52 | 3.62 | 3.64 | 3.71 | 3.75 | 3.77 | 3.82 | 3.86 | 4.11 |

As can be seen from the above data in Table 5, when the thickness of the first transition layer is greater than 3000 µm and less than 0.3 µm, the voltage drop of the plugged structure formed by the flat terminal 113 and the clamping terminal 213 is greater than 4 mV, which does not meet the required value. Therefore, the inventor selects the thickness of the first transition layer to be 0.3 µm to 3000 µm. When the thickness of the first transition layer is in the range of 2.5 µm to 1000 µm, the voltage drop of the plugged structure formed by the flat terminal 113 and the clamping terminal 213 is an optimal value, so the inventor exemplarily selects the thickness of the first transition layer to be 2.5 µm to 1000 µm.

In an embodiment, the first transition layer is made of a material including one or more selected from the group consisting of nickel, cadmium, manganese, zirconium, cobalt, tin, titanium, chromium, gold, silver, zinc, tin-lead alloy, silver-antimony alloy, palladium, palladium-nickel alloy, graphite silver, graphene silver, hard silver and silver-gold-zirconium alloy.

The material of the first transition layer is the same as that of the electrode overlapped with the flat terminal 113. This solution can improve the surface strength of the flat terminal 113 and avoid the corrosion caused by the overlapping of the flat terminal 113 with dissimilar metals.

In order to verify the influence of different materials of the first transition layer on the performance of the flat terminal 113, the inventor adopts the flat terminals 113 with the same specification and the same material, and with the first transition layers made of different materials, to carry out a series of tests on the corrosion resistance time. The test results are shown in Table 6.

The test of the corrosion resistance time in Table 6 is to put the samples of the flat terminal 113 into a salt fog spraying test chamber to spray salt fog to each position on each flat terminal 113, then take the flat terminals 113 out every 20 hours to clean the flat terminals 113 and observe surface corrosion of the flat terminals 113, which is a cycle, and stop the test when a corrosion area of the surface of the sample of the flat terminal 113 is more than 10% of a total area thereof and record the number of cycles. In this embodiment, the number of cycles less than 80 is considered as being unqualified.

**Table 6: Influence of different materials of the first transition layer on the corrosion resistance of the sample of the flat terminal 113**

| Different materials of the first transition layer | | | | | | | | | |
|---|---|---|---|---|---|---|---|---|---|
| Nickel | Cadmium | Manganese | Zirconium | Cobalt | Tin | Titanium | Zinc | Chrome | |
| Number of cycles of corrosion resistance tests | | | | | | | | | |
| 87 | 129 | 119 | 129 | 128 | 85 | 122 | 84 | 108 | |
| | | | | | | | | | |

| Different materials of the first transition layer | | | | | | | | | |
|---|---|---|---|---|---|---|---|---|---|
| Gold | Silver | Silver-antimony alloy | Graphite silver | Graphene silver | Silver-gold-zirconium alloy | Palladium | Palladium-nickel alloy | Tin-lead alloy | Hard silver |
| Number of cycles of corrosion resistance tests | | | | | | | | | |
| 134 | 128 | 122 | 136 | 126 | 134 | 112 | 122 | 114 | 138 |

As can be seen from Table 6, when the material of the first transition layer includes conventional metals such as tin, nickel and zinc, the test results are not as good as those of other metals, and the test results of other metals far exceed the standard values and the performances are stable. Therefore, the inventor selects that the material of the first transition layer includes (or is) one or more selected from the group consisting of nickel, cadmium, manganese, zirconium, cobalt, tin titanium, chromium, gold, silver, zinc-tin-lead alloy, silver-antimony alloy, palladium, palladium-nickel alloy, graphite silver, graphene silver, hard silver and silver-gold-zirconium alloy. More exemplarily, the material of the first transition layer includes one or more selected from the group consisting of cadmium, manganese, zirconium, cobalt, titanium, chromium, gold, silver, tin-lead alloy, silver-antimony alloy, palladium, palladium-nickel alloy, graphite silver, graphene silver, hard silver and silver-gold-zirconium alloy.

In an embodiment, the busbar includes a first flat wire core which has a hardness of 8 HV to 105 HV.

In order to verify the influence of the hardness of the first flat wire core 112 on a peeling force of the first transition layer from the first flat wire core 112 and a bending torque of the first flat wire core 112 in X-Y direction, the inventor selects the samples of the first flat wire cores 112 with the same size and different hardness to test the peeling force of the first transition layer from the first flat wire core 112 and the bending torque of the first flat wire core 112, and the test results are shown in Table 7.

The method for testing the peeling force of the first transition layer is to adopt a universal tensile tester, fix the first flat wire core 112 having the first transition layer on a tensile fixture of the universal tensile tester, stretch the first flat wire core 112 by the universal tensile tester at a speed of 50 mm/min, and record the tensile value when the first transition layer is finally peeled off from the first flat wire core 112. In this embodiment, the tensile value greater than 900 N is considered to be qualified.

The method for testing the bending torque of the first flat wire core 112 is to adopt a torque tester to test the torque value of the deformation of the first flat wire cores 112 during bending when the first flat wire cores 112 are bent by 90° at the same radius and the same speed. In this embodiment, the torque value less than 30 N•m is considered to be qualified.

**Table 7: Influence of the hardness of the first flat wire core 112 on the peeling force of the first transition layer and the bending torque**

| Different hardness of the first flat wire cores 112 (HV) | | | | | | | | | | | |
|---|---|---|---|---|---|---|---|---|---|---|---|
| 3 | 5 | 8 | 10 | 15 | 35 | 55 | 65 | 85 | 105 | 110 | 115 |

| Peeling force of the first transition layer (N) | | | | | | | | | | | |
|---|---|---|---|---|---|---|---|---|---|---|---|
| 864 | 882 | 909 | 932 | 948 | 954 | 968 | 974 | 984 | 998 | 1008 | 1016 |

| Torque value of bending in X-Y direction (N•m) | | | | | | | | | | | |
|---|---|---|---|---|---|---|---|---|---|---|---|
| 20.8 | 21.6 | 23.7 | 23.5 | 25.3 | 25.1 | 25.9 | 27.0 | 28.1 | 29.2 | 30.6 | 30.8 |

As can be seen from Table 7, when the hardness of the first flat wire core 112 is less than 8 HV, the tensile force for peeling off the first transition layer from the first flat wire core 112 is less than the qualified value. At this time, the first transition layer on the first flat wire core 112 is easily peeled off therefrom under an external force, which disables the protection and the function of the first flat wire core 112, so that the purpose of electric energy transmission cannot be achieved, and a short circuit may be caused in severe cases, resulting in burning accidents. When the hardness of the first flat wire core 112 is greater than 105 HV, due to the high hardness of the first flat wire core 112 itself, a larger torque is required to deform the first flat wire core 112 if the first flat wire core 112 needs to be bent, and the torque value does not meet the qualified value at this time. Therefore, the inventor sets the hardness of the first flat wire core 112 to be 8 HV to 105 HV.

As can be seen from the data in Table 7, when the hardness of the first flat wire core 112 is 10 HV to 55 HV, both the tensile value when the first transition layer is peeled off from the first flat wire core 112 and the torque value of bending of the first flat wire core 112 in X-Y direction are well within their ranges. Therefore, the inventor prefers the hardness of the first flat wire core 112 to be 10 HV to 55 HV.

In an embodiment, an end of the flat terminal 113 is provided with a chamfer. During injection-molding and mounting of the busbar 11, both the flat terminal 113 and the clamping terminal 213 may have an assembly error. At this time, there will also be a large assembly error when the flat terminal 113 is plugged with the clamping terminal 213. In order to conveniently and accurately make a plugging connection between the flat terminal 113 and the clamping terminal 213, a chamfer is provided at the end of the flat terminal 113 to guide the insertion of the flat terminal 113 into the clamping terminal 213.

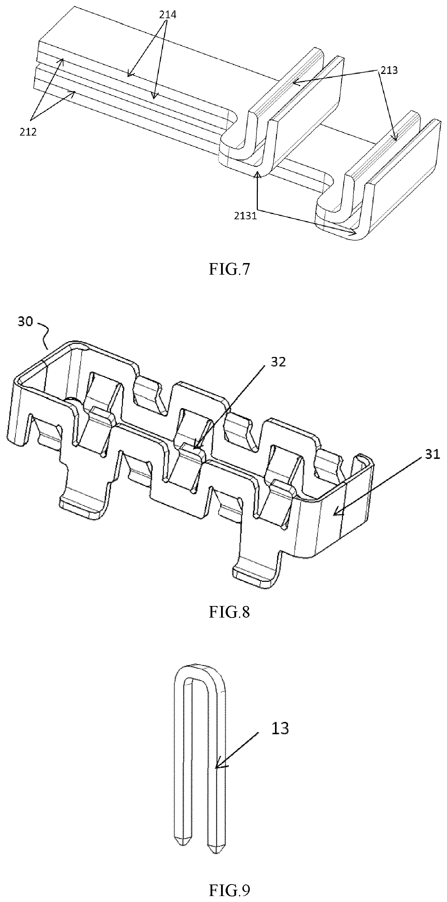

In an embodiment, as illustrated in FIGS. 9 and 13, the male-end connecting mechanism 10 includes an interlocking connector 13, at least part of which is integrally injection-molded in the male-end housing 12. High-voltage interlocking is a safety design method to monitor the integrity of a high-voltage loop with a low-voltage signal. Different projects have different designs for the implementation of the high-voltage interlocking. The high-voltage interlocking is to monitor the accidental disconnection of the high-voltage loop to avoid the damage to the automobile due to the sudden loss of power. In this embodiment, an end of the high-voltage interlocking is an interlocking connector 13, which is a U-shaped or V-shaped low-voltage loop with two plugging pins electrically connected to each other. The interlocking connector 13 does not need to be mounted, but may be directly formed in the male-end housing 12 by means of integral injection-molding, with the plugging pins exposed outside the male-end housing 12. The interlocking connector 13 is in matched connection with a high-voltage interlocking structure 23 in the female-end connecting mechanism 20 to form a low-voltage monitoring loop. When the busbar type connecting mechanism in this embodiment is accidentally disconnected, the interlocking connector 13 and the high-voltage interlocking structure 23 are also disconnected, and the low-voltage monitoring loop gives an alarm to a central control system, so as to prevent the automobile from being damaged due to the sudden loss of power.

In an embodiment, as illustrated in FIG. 7, there are at least two double-busbars, which are stacked from top to bottom. The female-end housing is integrally injection-molded between at least parts of the double-busbars and/or at least parts of the clamping terminals, and/or is integrally injection-molded at outer peripheries of at least parts of the double-busbars and/or at least parts of the clamping terminals, to form an insulating structure.

Generally, an electrically-conductive loop is composed of two loops. For example, in a DC charging stand, there are a DC positive charging cable and a DC negative charging cable, and in an AC charging stand, there are an AC live charging cable and an AC neutral charging cable. The double-busbars 21 are stacked from top to bottom, which can effectively utilize the assembly space, the electromagnetic interference generated by the double-busbars 21 cancel out each other. After two double-busbars 21 are stacked one above the other, the raw material of the female-end housing 22 is injected between at least parts of the double-busbars 21 and/or at least parts of the clamping terminals 213 and injected to outer peripheries of at least parts of the double-busbars 21 and/or at least parts of the clamping terminals 213 by an injection mold, to form the female-end housing 22.

In an embodiment, as illustrated in FIG. 2, the double-busbar 21 includes a second outer insulating layer 211 and a second flat wire core 212, The second outer insulating layer 211 is partially peeled off to expose the second flat wire core 212, and an end of the second outer insulating layer 211 is located in or abutted against the female-end housing 22. The second flat wire core 212 is the electrically-conductive part of the double-busbar 21, and the second outer insulating layer 211 is the insulating part of the double-busbar 21. Before the injection-molding of the female-end housing 22, it is necessary to peel off a part of the second outer insulating layer 211 of the double-busbar 21 to expose the second flat wire core 212 inside the second outer insulating layer 211, and then carry out the connection with the clamping terminal 213 and the integral injection-molding with the female-end housing 22.

In an embodiment, there are at least two double-busbars 21, which are stacked from top to bottom. Each double-busbar 21 includes a second flat wire core 212, and a vertical distance between two second flat wire cores 212 is less than or equal to 27 cm.

Further, there are at least two of the double-busbars 21, which are stacked from top to bottom. Each double-busbar 21 includes a second flat wire core 212, and a vertical distance between two second flat wire cores 212 is less than or equal to 7 cm.

Exemplarily, width directions of the two double-busbars 21 are parallel to each other. The double-busbars 21 are mirror images of each other, with a distance H between the two second flat wire cores 212. A stacking direction of the two double-busbars 21 is a vertical direction illustrated in FIG. 10.

When the double-busbars 21 have an overlapping degree of 100% in the stacking direction, the influence of the distance H between the two second flat wire cores 212 on the cancellation of the magnetic fields is shown in Table 8. The percentage of magnetic field cancellation being greater than 30% is considered to be qualified.

**Table 8: Influence of the distance H between two second flat wire core 212 on the magnetic field cancellation when the stacked double-busbars 21 have an overlapping degree of 100%**

| Distance between the two second flat wire cores 212 (H) | Percentage of magnetic field cancellation | | | | |
|---|---|---|---|---|---|
| | Sample 1 | Sample 2 | Sample 3 | Sample 4 | Sample 5 |
| 30cm | 0.0% | 0.0% | 0.0% | 0.0% | 0.0% |
| 29cm | 10.6% | 11.1% | 11.3% | 10.7% | 12.0% |
| 28cm | 15.2% | 20.7% | 25.2% | 25.4% | 24.6% |
| 27cm | 30.4% | 32.3% | 31.1% | 30.7% | 31.3% |
| 25cm | 40.6% | 42.1% | 44.1% | 41.7% | 40.5% |
| 23cm | 51.4% | 50.2% | 52.2% | 53.6% | 50.2% |
| 21cm | 59.3% | 54.1% | 58.6% | 59.3% | 61.2% |
| 19cm | 70.4% | 66.4% | 65.1% | 68.3% | 71.2% |
| 17cm | 75.9% | 76.3% | 77.1% | 75.9% | 78.6% |
| 15cm | 80.4% | 81.1% | 79.3% | 80.3% | 80.1% |
| 13cm | 85.6% | 86.7% | 89.4% | 848% | 81.9% |
| 11cm | 90.8% | 890% | 91.2% | 90.3% | 91.8% |
| 9cm | 92.8% | 92.4% | 93.0% | 93.5% | 94.6% |
| 7cm | 99.9% | 100.0% | 100.0% | 100.0% | 100.0% |
| 5cm | 100.0% | 99.80% | 100.0% | 99.7% | 100.0% |
| 3cm | 100.0% | 100.0% | 100.0% | 99.9% | 100.0% |
| 2cm | 100.0% | 99.9% | 100.0% | 99.9% | 100.0% |
| 1cm | 99.8% | 99.9% | 100.0% | 99.9% | 100.0% |

The overlapping degree means the percentage of an overlapping area of two double-busbars 21 in the stacking direction to an area of one double-busbar 21.

As can be seen from Table 8, when the overlapping degree of the two double-busbars 21 in the stacking direction is 100% and the distance H between the two second flat wire core 212 is less than or equal to 27 cm, the percentage of magnetic field cancellation is qualified, which is effective in preventing electromagnetic interference. Exemplarily, when the vertical distance between the two second flat wire cores 212 is less than or equal to 7 cm, the magnetic fields can be effectively cancelled out by each other and the effect is obvious, so that the distance H between the two second flat wire cores 212 is further set to be less than or equal to 7 cm.

In the busbar type connecting mechanism of this embodiment, the double-busbars 21 are stacked from top to bottom, which can effectively reduce electromagnetic interference to other parts after the double-busbars 21 are electrified, thereby eliminating the shielding layer structure of the high-voltage charging harness, and reducing the cost and weight.

In an embodiment, there are at least two of the double-busbars 21, which are stacked from top to bottom. Each double-busbar 21 includes a second flat wire core 212, and an overlapping degree of the two second flat wire cores 212 in a stacking direction is 40% to 100%.

When the double-busbars 21 are stacked from top to bottom, since each double-busbar 21 is a flat structure, its magnetic field is strongest at its portion with the largest area, so that by stacking double-busbar 21, the magnetic fields generated by the positive and negative double-busbars 21 can be cancelled out each other, thereby eliminating the electromagnetic interference to other electrical appliances when the double-busbars 21 are electrified.

The distance between the double-busbars 21 and the overlapping degree thereof have great influences on the degree of magnetic field cancellation. The present disclosure effectively cancels the magnetic fields of the double-busbars 21 by the stacked design of the two double-busbars 21 in addition to the control of the distance therebetween and the overlapping degree thereof.

When the distance between the second flat wire cores 212 of the two double-busbars 21 is 7 cm, the influence of the overlapping degree of the two double-busbars 21 in the stacking direction on the magnetic field cancellation is shown in Table 9 The percentage of magnetic field cancellation being greater than 30% is considered to be qualified.

**Table 9: Influence of the overlapping area of the stacked double-busbars 21 on the magnetic field cancellation when the distance between the second flat wire cores 212 is 7 cm**

| Overlapping area of the stacked double-busbars (A) | Percentage of magnetic field cancellation | | | | |
|---|---|---|---|---|---|
| | Sample 1 | Sample 2 | Sample 3 | Sample 4 | Sample 5 |
| 0% | 0.0% | 0.0% | 0.0% | 0.0% | 0.0% |
| 10% | 11.9% | 12.2% | 11.8% | 12.0% | 11.6% |
| 30% | 20.5% | 20.8% | 22.5% | 24.6% | 23.3% |
| 40% | 30.1% | 30.8% | 31.1% | 32.3% | 33.1% |
| 50% | 45.8% | 44.6% | 46.9% | 48.3% | 45.6% |
| 70% | 49.9% | 50.3% | 50.8% | 51.2% | 49.8% |
| 90% | 62.2% | 60.7% | 60.1% | 60.8% | 62.1% |
| 95% | 80.1% | 81.1% | 80.9% | 80.8% | 80.8% |
| 98% | 98.5% | 97.8% | 97.2% | 97.4% | 98.3% |
| 100% | 99.8% | 100.0% | 100.0% | 99.9% | 100.0% |

As can be seen from Table 9, when the distance between the two second flat wire cores 212 is 7 cm, the overlapping degree of the double-busbars 21 in the stacking direction is 40% to 100%, and the percentage of magnetic field cancellation is qualified, which is effective in preventing electromagnetic interference. The effect is obvious when the overlapping degree of the two double-busbars 21 in the stacking direction is greater than 90%, and the effect is the best when the overlapping degree is 100%.

The double-busbar 21 includes a second flat wire core 212 which is composed of two flat conductors 214 overlapped with and connected to each other. The overlapped flat conductors 214 are attached to each other. When being attached to each other, the two flat conductors 214 are connected to each other by one or more selected from the group consisting of pressure welding, diffusion welding, friction welding, resistance welding, ultrasonic welding or laser welding.

The pressure welding method is a method of applying pressure to weldments to make binding surfaces of them be in close contact and generate a certain plastic deformation to complete the welding.

The friction welding refers to a method of welding by using the heat generated by the friction between the contact surfaces of the workpieces as a heat source, to make the workpieces be plastically deformed under pressure.

The resistance welding refers to a method of welding by passing strong current through a contact point that is between an electrode and a workpiece, to generate heat by a contact resistance.

The ultrasonic welding is to transmit high-frequency vibration waves to surfaces of two to-be-welded objects, so that the surfaces of the two objects rub against each other under pressure to form a fuse molecular layer.

The laser welding is an efficient and precise welding method that uses a laser beam with high energy density as a heat source.

The diffusion welding refers to a solid-state welding method that pressurizes the workpiece at high temperature without producing visible deformation and relative movement.

The two flat conductors 214 can be combined together by one or combinations of the above modes.

In an embodiment, the double-busbar 21 includes a second flat wire core 212 and a second outer insulating layer 211, a front end of the second flat wire core 212 is connected to the clamping terminal 213, and the female-end housing 22 wraps at least part of the clamping terminal 213. The second outer insulating layer 211 of the double-busbar 21 is peeled off to expose the second flat wire core 212, which is connected to the clamping terminal 213. The clamping terminal 213 is provided to be effectively plugged with the flat terminal 113, so as to achieve an effective electrical connection of the busbar type connecting mechanism.

In order to make an effective plugging connection between the clamping terminal 213 and the flat terminal 113, the clamping terminal 213 needs to be exposed outside the female-end housing 22 during the integral molding of the double-busbar 21 and the female-end housing 22, so as to prevent the failure of the plugging connection between the clamping terminal 213 and the flat terminal 113 due to the covering of the female-end housing 22.

In an embodiment, the front end of the second flat wire core 212 is connected to the clamping terminal 213 by one or more selected from the group consisting of resistance welding, friction welding, ultrasonic welding, arc welding, laser welding, electron beam welding, pressure welding, diffusion welding, magnetic induction welding, screwing, clamping, splicing and crimping. The above connection modes are the same as those described above, and are not described here.

In an embodiment, the second flat wire core 212 forms an integral structure with the clamping terminal 213. The two flat conductors 214 are extended to form the clamping terminal 213 at the front end of the two flat conductors 214, thereby reducing the materials of the clamping terminal 213, reducing the material cost and the processing time, and molding the two flat conductors 214 at the front end of the second flat wire core 212 into various shapes as required without considering the assembly.

In an embodiment, at least part of the clamping terminal 213 protrudes from an outer wall of the female-end housing 22, or the female-end housing 22 is provided with an open boss in which at least part of the clamping terminal 213 is disposed. In the above embodiment, the flat terminal 113 protrudes from the male-end housing 12, and may be in plugging connection with the clamping terminal 213 disposed in the open boss. Alternatively, the male-end housing 12 has a groove, and the flat terminal 113 protrudes from a bottom surface of the groove without exceeding the male-end housing 12, and may be in plugging connection with the clamping terminal 213 protruding from the outer wall of the female-end housing 22.

In an embodiment, as illustrated in FIGS. 2 and 3, the double-busbar 21 includes a second flat wire core 212, and a second bent portion 2131 with an angle of 0° to 180° is included between a front end of the second flat wire core 212 and the clamping terminal 213. The second bent portion 2131 may be provided with different bending angles to adapt to the connecting mechanisms with different shapes and different directions of the flat terminal 113. According to the mounting environment and the needs of simplifying the structure of the connecting mechanism and reducing the connecting space, the designer may set different bending angles of the second bent portions 2131 to enable the second bent portions 2131 to be connected to the flat terminals 113 with different angles, thereby changing the cable routings at both sides of the connecting mechanism. In addition, a main body of the double-busbar 21 is connected to the clamping terminal 213 through the second bent portion 2131, and the extending direction of the double-busbar 21 is adjusted by the second bent portion 2131, so that the double-busbar 21 can be adaptive to the mounting environment.

In an embodiment, at least part of the surface of the clamping terminal 213 is provided with a second transition layer. When the clamping terminal 213 and the flat terminal 113 are made of different materials, the electrical conduction therebetween will cause an electrochemical corrosion due to a potential difference, thereby reducing the service lives of the clamping terminal 213 and the flat terminal 113. In order to reduce the electrochemical corrosion, at least part of the surface of the clamping terminal 213 may be provided with a transition layer which may be made of a metal material with a potential between those of the materials of the clamping terminal 213 and the flat terminal 113, thereby isolating the clamping terminal 213 and the flat terminal 113, and prolonging the service lives thereof.

Further, the second transition layer is attached to at least part of the surface of the clamping terminal 213 by one or more selected from the group consisting of electroplating, chemical plating, magnetron sputtering, vacuum plating, pressure welding, diffusion welding, friction welding, resistance welding, ultrasonic welding or laser welding. The method for fixing the second transition layer to the clamping terminal 213 is the same as that for fixing the first transition layer to the flat terminal 113.

In an embodiment, the second transition layer has a thickness of 0.3 µm to 3000 µm.

In an embodiment, the second transition layer has a thickness of 2.5 µm to 1000 µm.

In order to test the influence of different thicknesses of the second transition layer on a voltage drop between the clamping terminal 213 and the flat terminal 113, the inventor adopts the clamping terminals 213 with the same material and the same structure, disposes the second transition layers with different thicknesses on the clamping terminal 213, respectively, while the flat terminal 113 is not provided with any transition layer, and then tests the voltage drop after the flat terminal 113 and the clamping terminal 213 are plugged with each other.

In this embodiment, it is unqualified if the voltage drop after the plugging between the clamping terminal 213 and the flat terminal 113 are plugged with each other is greater than 4 mV.

**Table 10: Influence of different thicknesses of the second transition layer on the voltage drop (mV):**

| Thicknesses of the second transition layer (µm) | | | | | | | | | | | | | | | |
|---|---|---|---|---|---|---|---|---|---|---|---|---|---|---|---|
| | 0.2 | 0.3 | 1 | 2.5 | 5 | 10 | 50 | 100 | 300 | 500 | 800 | 1000 | 2000 | 3000 | 4000 |

| Serial No. | Voltage drop when plugged (mV) | | | | | | | | | | | | | | |
|---|---|---|---|---|---|---|---|---|---|---|---|---|---|---|---|
| 1 | 4.2 | 3.5 | 3.3 | 3.2 | 3.3 | 3.4 | 3.5 | 3.5 | 3.6 | 3.7 | 3.7 | 3.8 | 3.8 | 3.9 | 4.1 |
| 2 | 4.0 | 3.4 | 3.3 | 3.2 | 3.2 | 3.5 | 3.6 | 3.6 | 3.6 | 3.6 | 3.8 | 3.8 | 3.9 | 3.8 | 4.2 |
| 3 | 4.1 | 3.4 | 3.4 | 3.2 | 3.2 | 3.4 | 3.5 | 3.7 | 3.5 | 3.7 | 3.8 | 3.8 | 3.8 | 3.8 | 4.0 |
| 4 | 4.1 | 3.5 | 3.2 | 3.1 | 3.1 | 3.4 | 3.6 | 3.6 | 3.7 | 3.7 | 3.8 | 3.8 | 3.8 | 3.9 | 4.1 |
| 5 | 4.2 | 3.4 | 3.3 | 3.1 | 3.2 | 3.5 | 3.5 | 3.6 | 3.7 | 3.8 | 3.8 | 3.8 | 3.8 | 3.8 | 4.2 |
| 6 | 4.2 | 3.4 | 3.2 | 3.2 | 3.3 | 3.4 | 3.5 | 3.6 | 3.6 | 3.7 | 3.7 | 3.7 | 3.7 | 3.7 | 4.2 |
| 7 | 4.2 | 3.6 | 3.3 | 3.2 | 3.2 | 3.6 | 3.4 | 3.6 | 3.6 | 3.7 | 3.7 | 3.8 | 3.8 | 3.8 | 4.1 |
| 8 | 4.2 | 3.4 | 3.4 | 3.2 | 3.3 | 3.4 | 3.5 | 3.7 | 3.7 | 3.7 | 3.7 | 3.7 | 3.9 | 3.8 | 4.1 |
| 9 | 4.1 | 3.5 | 3.2 | 3.1 | 3.3 | 3.4 | 3.6 | 3.6 | 3.8 | 3.7 | 3.7 | 3.7 | 3.8 | 3.9 | 4.2 |
| 10 | 4.0 | 3.4 | 3.3 | 3.1 | 3.3 | 3.3 | 3.5 | 3.6 | 3.6 | 3.8 | 3.8 | 3.8 | 3.9 | 3.8 | 4.2 |
| Average value | 4.13 | 3.45 | 3.29 | 3.16 | 3.24 | 3.42 | 3.52 | 3.62 | 3.64 | 3.71 | 3.75 | 3.77 | 3.82 | 3.82 | 4.14 |

As can be seen from the above data in Table 10, when the thickness of the second transition layer is greater than 3000 µm and less than 0.3 µm, the voltage drop of the plugged structure formed by the flat terminal 113 and the clamping terminal 213 is greater than 4 mV, which does not meet the required value. Therefore, the inventor selects the thickness of the second transition layer to be 0.3 µm to 3000 µm. When the thickness of the second transition layer is in the range of 2.5 µm to 1000 µm, the voltage drop of the plugged structure formed by the flat terminal 113 and the clamping terminal 213 is an optimal value, so the inventor exemplarily selects the thickness of the second transition layer to be 2.5 µm to 1000 µm.

In an embodiment, the second transition layer is made of a material including one or more selected from the group consisting of nickel, cadmium, manganese, zirconium, cobalt, tin, titanium, chromium, gold, silver, zinc, tin-lead alloy, silver-antimony alloy, palladium, palladium-nickel alloy, graphite silver, graphene silver, hard silver and silver-gold-zirconium alloy.

The material of the second transition layer is the same as that of the electrode overlapped with the clamping terminal 213. This solution can improve the surface strength of the clamping terminal 213 and avoid the corrosion caused by the overlapping of the clamping terminal 213 with dissimilar metals.

In order to verify the influence of different materials of the second transition layer on the performance of the clamping terminal 213, the inventor adopts the clamping terminals 213 with the same specification and the same material, and with the second transition layers made of different materials, to carry out a series of tests on the corrosion resistance time. The test results are shown in Table 11.

The test of the corrosion resistance time in Table 11 is to put the samples of the clamping terminals 213 into a salt fog spraying test chamber to spray salt fog to each position on each clamping terminal 213, then take the clamping terminals 213 out every 20 hours to clean the clamping terminals 213 and observe surface corrosion of the clamping terminals 213, which is a cycle, and stop the test when a corrosion area of the surface of the sample of the clamping terminal 213 is more than 10% of a total area thereof and then record the number of cycles at that time. In this embodiment, the number of cycles less than 80 is considered as being unqualified.

**Table 11: Influence of different materials of the second transition layer on the corrosion resistance of the sample of the clamping terminal 213**

| Different materials of the second transition layer | | | | | | | | | | | | | | | | |
|---|---|---|---|---|---|---|---|---|---|---|---|---|---|---|---|---|
| Nickel | Cadmium | | Manganese | | Zirconium | | Cobalt | | Tin | | Titanium | | Zinc | | Chrome | |
| Number of cycles of corrosion resistance tests | | | | | | | | | | | | | | | | |
| 87 | 129 | | 119 | | 129 | | 128 | | 84 | | 123 | | 86 | | 108 | |
| | | | | | | | | | | | | | | | | |

| Different materials of the second transition layer | | | | | | | | | | | | | | | | |
|---|---|---|---|---|---|---|---|---|---|---|---|---|---|---|---|---|
| Gold | Silver | Silver-antimony alloy | | Graphite silver | | Graphene silver | | Silver-gold-zirconium alloy | | Palladium | | Palladium-nickel alloy | | Tin-lead alloy | | Hard silver |
| Number of cycles of corrosion resistance tests | | | | | | | | | | | | | | | | |
| 135 | 128 | 124 | | 136 | | 127 | | 134 | | 112 | | 123 | | 115 | | 137 |

As can be seen from Table 11, when the material of the second transition layer includes conventional metals such as tin, nickel and zinc, the test results are not as good as those of other metals, and the test results of other metals far exceed the standard values and the performances are stable. Therefore, the inventor selects that the material of the second transition layer includes (or is) one or more selected from the group consisting of nickel, cadmium, manganese, zirconium, cobalt, tin titanium, chromium, gold, silver, zinc-tin-lead alloy, silver-antimony alloy, palladium, palladium-nickel alloy, graphite silver, graphene silver, hard silver and silver-gold-zirconium alloy. More exemplarily, the material of the second transition layer includes one or more selected from the group consisting of cadmium, manganese, zirconium, cobalt, titanium, chromium, gold, silver, tin-lead alloy, silver-antimony alloy, palladium, palladium-nickel alloy, graphite silver, graphene silver, hard silver and silver-gold-zirconium alloy.

In an embodiment, the second flat wire core 212 has a hardness of 8 HV to 105 HV.

In order to verify the influence of the hardness of the second flat wire core 212 on a peeling force of the second transition layer from the second flat wire core 212 and a bending torque of the second flat wire core 212 in X-Y direction, the inventor selects the samples of the second flat wire cores 212 with the same size and different hardness to test the peeling force of the second transition layer from the second flat wire core 212 and the bending torque of the second flat wire core 212, and the test results are shown in Table 12.

The method for testing the peeling force of the second transition layer is to adopt a universal tensile tester, fix the second flat wire core 212 having the second transition layer on a tensile fixture of the universal tensile tester, stretch the second flat wire core 212 by the universal tensile tester at a speed of 50 mm/min, and record the tensile value when the second transition layer is finally peeled off from the second flat wire core 212. In this embodiment, the tensile value greater than 900 N is considered to be qualified.

The method for testing the bending torque of the second flat wire core 212 is to adopt a torque tester to test the torque value of the deformation of the second flat wire core 212 during bending when the second flat wire cores 212 are bent by 90° at the same radius and the same speed. In this embodiment, the torque value less than 30 N•m is considered to be qualified.

**Table 12: Influence of the hardness of the second flat wire core on the peeling force of the second transition layer and the bending torque**

| Different hardness of the second flat wire core (HV) | | | | | | | | | | | |
|---|---|---|---|---|---|---|---|---|---|---|---|
| 3 | 5 | 8 | 10 | 15 | 35 | 55 | 65 | 85 | 105 | 110 | 115 |

| Peeling force of the second transition layer (N) | | | | | | | | | | | |
|---|---|---|---|---|---|---|---|---|---|---|---|
| 860 | 883 | 909 | 932 | 948 | 954 | 968 | 974 | 983 | 997 | 1009 | 1015 |

| Torque value of bending in X-Y direction (N•m) | | | | | | | | | | | |
|---|---|---|---|---|---|---|---|---|---|---|---|
| 20.9 | 21.4 | 22.9 | 23.6 | 24.4 | 25.2 | 25.9 | 27.0 | 28.1 | 29.2 | 30.6 | 30.9 |

As can be seen from Table 12, when the hardness of the second flat wire core 212 is less than 8 HV, the tensile force for peeling off the second transition layer from the second flat wire core 212 is less than the qualified value. At this time, the second transition layer on the second flat wire core 212 is easily peeled off therefrom under an external force, which disables the protection and the function of the second flat wire core 212, so that the purpose of electric energy transmission cannot be achieved, and a short circuit may be caused in severe cases, resulting in burning accidents. When the hardness of the second flat wire core 212 is greater than 105 HV, due to the high hardness of the second flat wire core 212 itself, a larger torque is required to deform the second flat wire core 212 if the second flat wire core 212 needs to be bent, and the torque value does not meet the qualified value at this time. Therefore, the inventor sets the hardness of the second flat wire core 212 to be 8 HV to 105 HV.

As can be seen from the data in Table 12, when the hardness of the second flat wire core 212 is 10 HV to 55 HV, both the tensile value when the second transition layer is peeled off from the second flat wire core 212 and the torque value of bending of the second flat wire core 212 in X-Y direction are well within their ranges. Therefore, the inventor prefers the hardness of the second flat wire core 212 to be 10 HV to 55 HV.

In an embodiment, the front end of the clamping terminal 213 is provided with an open groove, and a width of the groove on an open side of the groove is greater than a width of the groove on a closed side of the groove. The clamping terminal 213 may have an error during assembling and processing, and both the flat terminal 113 and the busbar 11 may have an assembly error during mounting. At this time, there will also be a large assembly error when the flat terminal 113 is assembled with the clamping terminal 213. In order to conveniently and accurately make a plugging connection between the flat terminal 113 and the clamping terminal 213, a chamfer is provided at an end of the clamping terminal 213 that is on the open side of the groove to guide the insertion of the flat terminal 113 into the groove.

In an embodiment, as illustrated in FIGS. 3 and 8, the clamping terminal 213 is sleeved by a clip 30, which is made of a memory alloy. The memory alloy is an intelligent metal with a memory, and its microstructure has two relatively stable states; the memory alloy may be changed into any desired shape at a high temperature and may be stretched at a low temperature; when being reheated, the memory alloy will remember its original shape and change back; the memory alloy have different crystal structures above and below its transition temperature, and when the temperature changes around the transition temperature, the memory alloy contracts or expands, thereby causing a change of its morphology. In some embodiments, the memory alloy is a nickel-titanium alloy.

In an embodiment, the transition temperature of the memory alloy is set to be in a range of 40°Cto 70°C. When the temperature of the clip 30 is lower than the transition temperature, the clip 30 is in an expanded state, and when the temperature of the clip 30 is higher than the transition temperature, the clip 30 is in a clamped state.

In general, the transition temperature is selected as between 40°C and 70°C, because if the transition temperature is lower than 40°C, the ambient temperature of the clamping terminal 213 and the clip 30 will reach nearly 40°C even in the absence of current conduction. In this case, the clip 30 is in a clamped state, and a belt-shaped groove of the clamping terminal 213 becomes smaller, resulting in the flat terminal 113 not being able to be plugged into the clamping terminal 213. As a result, the flat terminal 113 and the flat terminal 113 cannot be plugged with or unplugged from each other, and cannot work.

At the room temperature, the flat terminal 113 and the clamping terminal 213 start to conduct current after being plugged with each other. Since the clip 30 is in an expanded state at the beginning of the plugging process, the contact area between the flat terminal 113 and the clamping terminal 213 is small and the current is large, which leads to the temperature rises of the clamping terminal 213 and the clip 30 after plugging. If the transition temperature is higher than 70°C, the temperature rise of the clip 30 takes a long time to reach the transition temperature, in other words, the plugged structure of the flat terminal 113 and the clamping terminal 213 is under the large current for a long time, which will easily cause electrical aging, and in severe cases, the plugged structure formed by the flat terminal 113 and the clamping terminal 213 will be overloaded and damaged, resulting in unnecessary losses.

Therefore, the transition temperature of the memory alloy is generally set to be between 40°C and 70°C.

The clip 30 has a memory function. The belt-shaped groove of the clamping terminal 213 is generally in an expanded state below the transition temperature. At this time, the flat terminal 113 of the busbar 11 can be plugged without an insertion force, so that an operator can easily plug the electrical appliance. During operation, current is conducted to the clamping terminal 213, and the temperature thereof gradually increases due to the effect of the resistance. When the temperature rises above the transition temperature, the clip 30 will contract radially, so that the contact area and the contact force between the belt-shaped groove of the clamping terminal 213 and the flat terminal 113 of the busbar 11 can be increased by the temperature rise, and the contact reliability can be improved. Since the insertion force is not required, the work is easier and the working efficiency is improved.

In an embodiment, as illustrated in FIG. 8, the clamping terminal 213 is sleeved by a clip 30, which includes a sidewall 31 and an elastic element 32 fixed thereon, and the elastic element 32 is connected to the clamping terminal 213. The clip 30 applies a pressure to the clamping terminal 213 through the elastic element 32 that is disposed on the sidewall, so that the belt-shaped groove of the clamping terminal 213 can clamp the flat terminal 113 of the busbar 11 more tightly, thereby ensuring the contact area between the clamping terminal 213 and the flat terminal 113, reducing the contact resistance and improving the electrical conductivity.

By disposing the clip 30, it is possible to ensure the tight connection between the clamping terminal 213 and the flat terminal 113.

Further, the pressure applied to the clamping terminal 213 by the elastic element 32 is 3 N to 200 N.

In order to verify the influence of the pressure applied to the clamping terminal 213 by the elastic element 32 on the contact resistance and the plugging and unplugging condition after the plugging of the flat terminal 113 with a large eccentricity, the inventor selects the flat terminal 113 and the clamping terminal 213 with the same size, and different elastic elements 32 to apply pressures to the clamping terminal 213. Then, the inventor selects the flat terminals 113 with the same eccentricity to be plugged with the clamping terminal 213, and tests the contact resistance between the terminals that are plugged with each other and tests the success rate of successful insertion of the flat terminal 113 in multiple plugging and unplugging experiments. The test results are shown in Table 13.

The method of testing the contact resistance is to adopt a micro-resistance measuring instrument, a measuring end of the micro-resistance measuring instrument is placed on the flat terminal 113 and the other end thereof is placed on the clamping terminal 213, with the same position for each measurement, and then read the value of the contact resistance on the micro-resistance measuring instrument. In this embodiment, the contact resistance greater than 1 mΩ is unqualified.

The method of testing the plugging success rate is to apply a pressure by each of the elastic units 32 to the clamping terminal 213 for plugging with 100 flat terminals 113 with the same eccentricity, record the number of successful one-time plugging, take a ratio of the above number to a total number of plugging and multiply the ratio by 100%. In this embodiment, the plugging success rate less than 95% is unqualified.

**Table 13: Influence of different pressures on the contact resistance and the plugging success rate**

| Pressure applied by the elastic unit 32 to the clamping terminal 213 (N) | | | | | | | | | | | | | | | |
|---|---|---|---|---|---|---|---|---|---|---|---|---|---|---|---|
| 1 | 2 | 3 | 10 | 20 | 40 | 60 | 80 | 100 | 120 | 140 | 160 | 180 | 200 | 210 | 220 |

| Contact resistance between the flat terminal 113 and the clamping terminal 213 (mΩ) | | | | | | | | | | | | | | | |
|---|---|---|---|---|---|---|---|---|---|---|---|---|---|---|---|
| 1.21 | 1.04 | 0.98 | 0.90 | 0.89 | 0.84 | 0.82 | 0.78 | 0.72 | 0.68 | 0.63 | 0.59 | 0.52 | 0.49 | 0.45 | 0.42 |

| Plugging success rate of the flat terminal 113 and the clamping terminal 213 (%) | | | | | | | | | | | | | | | |
|---|---|---|---|---|---|---|---|---|---|---|---|---|---|---|---|
| 100 | 100 | 100 | 100 | 100 | 100 | 100 | 99 | 98 | 96 | 96 | 95 | 95 | 95 | 89 | 86 |

As can be seen from Table 13, when the pressure applied to the clamping terminal 213 by the elastic unit 32 is less than 3 N, although the plugging success rate is qualified, the contact resistance between the flat terminal 113 and the clamping terminal 213 is greater than 1 mΩ, which is too large. When the pressure applied to the clamping terminal 213 by the elastic unit 32 is greater than 200 N, the plugging success rate is less than 95%, which cannot meet the application requirement. Therefore, the inventor sets the pressure applied to the clamping terminal 213 by the elastic unit 32 to be 3 N to 200 N.

In an embodiment, the elastic unit 32 is an elastic rubber body, a spring or a metal elastic sheet. When the elastic unit 32 is an elastic rubber body, the pressure applied to the clamping terminal 213 is ensured by an elastic force generated by compressing the elastic rubber body. When the elastic unit 32 is a compression spring, the pressure applied to the clamping terminal 213 is ensured by an elastic force generated by compressing the compression spring. When the elastic unit 32 is a metal elastic sheet, it is integrally formed with the clip 30, and may be in the form of a single-ended elastic sheet in which one end is fixed and the other end is free, or in the form of a double-ended elastic sheet in which both ends are fixed and the middle is convex, so that the pressure applied to the clamping terminal 213 can be ensured by the elastic force of the metal elastic sheet itself.

In an embodiment, as illustrated in FIGS. 10 and 13, the female-end connecting mechanism 20 includes a high-voltage interlocking structure 23, which is electrically connected to the interlocking connector 13 to form a loop. High-voltage interlocking is a safety design method to monitor the integrity of a high-voltage loop with a low-voltage signal. The high-voltage interlocking is to monitor the accidental disconnection of the high-voltage loop to avoid the damage to the automobile due to the sudden loss of power. In this embodiment, one end of the high-voltage interlocking structure of is provided with the interlocking connector 13, which is a U-shaped or V-shaped low-voltage loop with two plugging pins electrically connected to each other; the other end is provided with two plugging terminals disposed in the female-end connecting mechanism 20 and connected to the low-voltage loop. The plugging terminals of the high-voltage interlocking structure 23 are in matched connection with the plugging pins of the interlocking connector 13 to form a low-voltage monitoring loop. When the busbar type connecting mechanism in this embodiment is accidentally disconnected, the interlocking connector 13 and the high-voltage interlocking structure 23 are also disconnected, and the low-voltage monitoring loop gives an alarm to ae central control system, so as to prevent the automobile from being damaged due to the sudden loss of power.

The embedded high-voltage interlocking structure replaces the previous assembled high-voltage interlocking structure, and is fixed in the connecting mechanism by integral injection-molding without assembling, so that the cost is reduced and the high-voltage interlocking effect is completely satisfied.

In an embodiment, the female-end connecting mechanism 20 and/or the male-end connecting mechanism 10 has a sealing structure 40, which can seal the flat terminal 113, the clamping terminal 213, part of the busbar 11 and the double-busbar 21 into the connecting mechanism, so as to prevent the external dust and moisture from damaging and corroding the internal conductive mechanism, and greatly prolong the service life of the connecting mechanism.

In an embodiment, as illustrated in FIG. 13, the sealing structure 40 is secondary injection-molded on the female-end housing 22 and/or the male-end housing 12. The sealing structure 40 of the connecting mechanism is no longer a separate sealing ring, and is a secondary injection-molded sealing structure 40 replacing the traditional sealing ring, so as to be directly molded on the connecting mechanism, thereby achieving a better injection bonding and a lower cost.

Further, the sealing structure 40 is made of rubber, soft glue or silica gel. These materials can be heated and melted by an injection molding machine and injected into a corresponding mold for molding, so that the processing is simple and the bonding is firm, and the service life of the sealing structure can be greatly prolonged. In addition, these materials have good elasticity and be extruded and deformed during the assembly of the connecting mechanism, so as to fill the gap and achieve a good sealing performance. Moreover, these materials are water-resistant and oil-resistant, thereby ensuring a long service life and a safe sealing performance of the sealing structure.

Further, a maximum gap between the sealing structure 40 and the male-end connecting mechanism 10 and/or the female-end connecting mechanism 20 is less than 520 nm.

In order to verify the influence of the gap between each sealing structure 40 and the adjacent device on the sealing grade, the inventor adopts a dry air method to test the sealing device. By vacuumizing or air pressurization, the internal and external pressures of the tested sample are controlled to be different, and a difference therebetween decreases if there is a leakage, so that the sealability can be detected by detecting the change of the air pressure. The detection medium is dry air, which is non-toxic and harmless without damaging the tested sample, and the detection environment is clean and tidy. For example, in the detection of the sealing structure 40 disposed on the male-end connecting mechanism 10, the inventor completely seals other joints after the connection between the male-end connecting mechanism 10 and the female-end connecting mechanism 20, selects the sealing structures 40 with different sealing degrees and partially extracts the dry air therein, so that the air pressure in the sealing structure 40 is lower than the external air pressure, and continuously detects the air pressure in the sealing structure 40. It is unqualified if the air pressure increases, and the test results are shown in Table 14.

**Table 14: Influence of the maximum gap between the sealing structure 40 and the male-end connecting mechanism 10 and/or the female-end connecting mechanism 20 on the change of the air pressure**

| Maximum gap (nm) | 530 | 520 | 500 | 450 | 400 | 350 | 300 | 280 | 260 |
|---|---|---|---|---|---|---|---|---|---|
| Whether the air pressure changes | Yes | No | No | No | No | No | No | No | No |

As can be seen from Table 14, when the maximum gap between the sealing structure 40 and the male-end connecting mechanism 10 and/or the female-end connecting mechanism 20 exceeds 520 nm, the air pressure changes, which means that air enters the sealing structure 40 and the test result is unqualified. Therefore, the inventor selects the maximum gap between the sealing structure 40 and the male-end connecting mechanism 10 and/or the female-end connecting mechanism 20 to be not less than 520 nm.

In an embodiment, the female-end connecting mechanism 20 has at least one temperature measuring structure for measuring the temperature of the double-busbar 21 and/or the clamping terminal 213. The temperature measuring structure may be at a distance from the double-busbar 21 and/or the clamping terminal 213. The heat radiation is transmitted to the temperature measuring structure from the double-busbar 21 and/or the clamping terminal 213, and then the temperature of the double-busbar 21 and/or the clamping terminal 213 is measured by the temperature measuring mechanism; or the temperature measuring structure includes a conductive element attached to the double-busbar 21 and/or the clamping terminal 213, the temperature of the double-busbar 21 and/or the clamping terminal 213 is measured from the temperature transmitted by the conductive element, and the measured temperature is transmitted to the control system, so as to adjust the current passing through the double-busbar 21 and/or the clamping terminal 213, thereby adjusting the temperature of the female-end connecting mechanism 20.

Further, the female-end connecting mechanism 20 has at least one temperature measuring structure attached to the double-busbar 21 and/or the clamping terminal 213 to measure the temperature thereof. The temperature measuring structure is a temperature sensor, which is directly attached to the double-busbar 21 and/or the clamping terminal 213, thereby directly obtaining the actual temperature thereof without calculation. The structure is simple and the temperature measurement is more accurate.

Further, the female-end connecting mechanism 20 has at least one temperature measuring structure located between two double-busbars 21 to measure the temperatures thereof. By placing the temperature measuring structure between the two double-busbars 21, it is possible to obtain the heat conducted by the two double-busbars 21 simultaneously and balance the heating quantities of the two double-busbars 21, which not only saves the number of the temperature measuring structures, but also directly obtains the highest temperature of the two double-busbars 21, thereby well controlling the temperatures of the double-busbars 21.

In an embodiment, the male-end connecting mechanism 10 has at least one temperature measuring structure configured to measure the temperature of the busbar 11 and/or the flat terminal 113. The temperature measuring structure may be at a distance from the busbar 11 and/or the flat terminal 113. The heat radiation is transmitted to the temperature measuring structure from the busbar 11 and/or the flat terminal 113, and then the temperature of the busbar 11 and/or the flat terminal 113 is measured by the temperature measuring mechanism; or the temperature measuring structure includes a conductive element attached to the busbar 11 and/or the flat terminal 113, the temperature of the busbar 11 and/or the flat terminal 113 is measured from the temperature transmitted by the conductive element, and the measured temperature is transmitted to the control system, so as to adjust the current passing through the busbar 11 and/or the flat terminal 113, thereby adjusting the temperature of the male-end connecting mechanism 10.

In an embodiment, the male-end connecting mechanism 10 has at least one temperature measuring structure attached to the busbar 11 and/or the flat terminal 113 to measure the temperature thereof. The temperature measuring structure is a temperature sensor, which is directly attached to the busbar 11 and/or the flat terminal 113, thereby directly obtaining the actual temperature thereof without calculation. The structure is simple and the temperature measurement is more accurate.

In an embodiment, the male-end connecting mechanism 10 has at least one temperature measuring structure located between two busbars 11 to measure the temperatures thereof. By placing the temperature measuring structure between the two busbars 11, it is possible to obtain the heat conducted by the two busbars 11 simultaneously and balance the heating quantities of the two busbars 11, which not only saves the number of the temperature measuring structures, but also directly obtains the highest temperature of the two busbars 11, thereby well controlling the temperatures of the busbars 11.

The temperature measuring structure may be a temperature sensor, which may be an NTC temperature sensor or a PTC temperature sensor, so as to timely and accurately monitor the temperature of the male-end connecting mechanism 10 or the female-end connecting mechanism 20.

The temperature sensor is an NTC temperature sensor or a PTC temperature sensor. These two temperature sensors are advantageous in that they are small in size and can measure gaps that cannot be measured by other thermometers; the usage of them is convenient, and the resistance value of them can be arbitrarily selected between 0.1 kΩ and 100 kΩ; and the temperature sensors are easy to be processed into complex shapes, can be produced in large quantities, have good stability and strong overload capacity, and are suitable for products such as adapters requiring small sizes and stable performances.

In an embodiment, the male-end connecting mechanism 10 and the female-end connecting mechanism 20 are connected by one or more selected from the group consisting of adhesive connection, magnetic connection, bayonet connection, plugging connection, latching connection, binding connection, threaded connection, riveting connection and welding connection.

In a first feasible technical solution, an adhesive structure may be adopted. For example, the to-be-spliced surfaces of the male-end connecting mechanism 10 and the female-end connecting mechanism 20 are respectively provided with adhesive layers, which are fixedly connected by adhesive.

In a second feasible technical solution, a magnetic attraction structure may be adopted. For example, the to-be-spliced surfaces of the male-end connecting mechanism 10 and the female-end connecting mechanism 20 are respectively provided with magnetic attraction parts, so that the connection is convenient and quick.

In a third feasible technical solution, a plugged structure may be adopted. The housing of the male-end connecting mechanism 10 is provided with a pin, and the housing of the female-end connecting mechanism 20 is provided with a slot. The pin is inserted into the slot to achieve a fixed connection, so that the male-end connecting mechanism 10 and the female-end connecting mechanism 20 are fixedly connected.

In a fourth feasible technical solution, a clamping structure may be adopted. For example, the male-end shielding housing 14 of the male-end connecting mechanism 10 is provided with a buckle, and the female-end of the female-end connecting mechanism 20 is provided with a slot. The buckle is engaged with the slot to achieve a fixed connection, so that the male-end connecting mechanism 10 and the female-end connecting mechanism 20 are fixedly connected.

In a fifth feasible technical solution, a bolted connection structure may be adopted, which includes a bolt and a nut. The bolt is fixed on the to-be-spliced surface of the male-end connecting mechanism 10, and the nut is disposed on the to-be-spliced surface of the female-end connecting mechanism 20 and is rotatable. After the bolt and the nut are screwed and tightened, the to-be-spliced surfaces of the male-end connecting mechanism 10 and the female-end connecting mechanism 20 are fixedly connected. The bolted connection structure adopts the bolt and the nut with the minimum size of M3, and the minimum torque is 0.2 N·m when the bolted connection structure is tightened.

In a sixth feasible technical solution, a riveting structure may be adopted which includes a rivet and fixing holes. The fixing holes are disposed on the to-be-spliced surfaces of the male-end connecting mechanism 10 and the female-end connecting mechanism 20, and the rivet is allowed to pass through the fixing holes and then deformed to tighten the fixing holes, so that the to-be-spliced surfaces of the male-end connecting mechanism 10 and the female-end connecting mechanism 20 are fixedly connected.

In a seventh feasible technical solution, a welding structure may be adopted. For example, welding pieces are disposed on the to-be-spliced surfaces of the male-end connecting mechanism 10 and the female-end connecting mechanism 20, and a welding machine is adopted to melt and connect the welding pieces together, so that the to-be-spliced surfaces of the male-end connecting mechanism 10 and the female-end connecting mechanism 20 are fixedly connected. The welding machine includes a hot melt welding machine and an ultrasonic welding machine.

In an eighth feasible technical solution, a binding structure may be adopted which includes a binding piece. Grooves are formed on the surfaces of the male-end connecting mechanism 10 and the female-end connecting mechanism 20, and the binding piece is adopted to bind the to-be-spliced surfaces of the male-end connecting mechanism 10 and the female-end connecting mechanism 20 together at the grooves, so that the to-be-spliced surfaces of the male-end connecting mechanism 10 and the female-end connecting mechanism 20 are fixedly connected. The binding piece includes a strapping tape, a pipe collar, a hook lock, etc.

In a ninth feasible technical solution, a latching structure may be adopted which includes a latching piece disposed on the to-be-spliced surfaces of the male-end connecting mechanism 10 and the female-end connecting mechanism 20 or an adjacent surface, so that the to-be-spliced surfaces of the male-end connecting mechanism 10 and the female-end connecting mechanism 20 are fixedly connected through the latching piece.

In an embodiment, a plugging force between the flat terminal 113 and the clamping terminal 213 is between 3 N and 150 N.

Further, a plugging force between the flat terminal 113 and the clamping terminal 213 is between 10 N and 95 N.

In order to verify the influence of the plugging force between the flat terminal 113 and the clamping terminal 213 on the contact resistance and the plugging situation between the flat terminal 113 and the clamping terminal 213, the inventor selects the flat terminal 113 and the clamping terminal 213 with the same shape and size, and designs different plugging forces between the flat terminal 113 and the clamping terminal 213, so as to observe the contact resistance between the flat terminal 113 and the clamping terminal 213 and the situation after multiple plugging.

The method of testing the contact resistance is to adopt a micro-resistance measuring instrument to measure the resistance at the contact position between the flat terminal 113 and the clamping terminal 213, and read the value on the micro-resistance measuring instrument and take the value as the contact resistance between the flat terminal 113 and the clamping terminal 213. In this embodiment, the contact resistance less than 50 µΩ is an ideal value.

The method of testing the plugging situation between the flat terminal 113 and the clamping terminal 213 is to plug the flat terminal 113 and the clamping terminal 213 for 50 times, and thereafter observe the numbers of times of dropping and the situation that plugging and unplugging are impossible. The number of times of dropping after plugging and unplugging is required to be less than 3, and the number of times of the situation that plugging and unplugging are impossible is required to be less than 5.

**Table 15: Influence of different plugging forces between the flat terminal 113 and the clamping terminal 213 on the contact resistance and the plugging situation**

| Plugging force between the flat terminal 113 and the clamping terminal 213 (N) | | | | | | | | | | | | | |
|---|---|---|---|---|---|---|---|---|---|---|---|---|---|
| 1 | 3 | 5 | 10 | 25 | 35 | 45 | 55 | 65 | 75 | 95 | 125 | 150 | 155 |

| Contact resistance (µΩ) | | | | | | | | | | | | | |
|---|---|---|---|---|---|---|---|---|---|---|---|---|---|
| 62 | 49 | 48 | 43 | 37 | 35 | 31 | 27 | 22 | 17 | 15 | 12 | 8 | 6 |

| Number of times of dropping after plugging and unplugging | | | | | | | | | | | | | |
|---|---|---|---|---|---|---|---|---|---|---|---|---|---|
| 5 | 1 | 1 | 0 | 0 | 0 | 0 | 0 | 0 | 0 | 0 | 0 | 0 | 0 |

| Number of times of the situation that plugging and unplugging are impossible | | | | | | | | | | | | | |
|---|---|---|---|---|---|---|---|---|---|---|---|---|---|
| 0 | 0 | 0 | 0 | 0 | 0 | 0 | 0 | 0 | 0 | 0 | 1 | 3 | 6 |

As can be seen from Table 15, when the plugging force between the flat terminal 113 and the clamping terminal 213 is less than 3 N, the contact resistance between the flat terminal 113 and the clamping terminal 213 is higher than the ideal value because the bonding force therebetween is too small, and at the same time, the number of times of dropping after plugging and unplugging exceeds 3, which is unqualified. When the plugging force between the flat terminal 113 and the clamping terminal 213 is greater than 150 N, the number of times of the situation that plugging and unplugging are impossible between the flat terminal 113 and the clamping terminal 213 is greater than 5, which is also unqualified. Therefore, the inventor sets the plugging force between the flat terminal 113 and the clamping terminal 213 to be between 3 N and 150 N.

As can be seen from Table 15, when the plugging force between the flat terminal 113 and the clamping terminal 213 is between 10 N and 95 N, there is neither dropping after plugging and unplugging nor the situation that plugging and unplugging are impossible, and the contact resistance is also within the range of the ideal value. Therefore, the inventor sets that the plugging force between the flat terminal 113 and the clamping terminal 213 is exemplarily between 10 N and 95 N.

In an embodiment, a contact resistance between the flat terminal 113 and the clamping terminal 213 is less than 9 mΩ.

Further, a contact resistance between the flat terminal 113 and the clamping terminal 213 is less than 1 mΩ.

Generally, large current needs to be conducted between the flat terminal 113 and the clamping terminal 213. If the contact resistance between the flat terminal 113 and the clamping terminal 213 is greater than 9 mΩ, a large temperature rise will occur at the contact position, and the temperature will be increasingly higher with the elapse of time. When the temperature between the flat terminal 113 and the clamping terminal 213 is too high, the mechanical deformation of the first transition layer is asynchronous with that of the flat terminal 113 due to different materials and different thermal expansion rates, and the mechanical deformation of the second transition layer is asynchronous with that of the clamping terminal 213 due to the same reason, resulting in internal stress between the first transition layer and the flat terminal 113 and between the second transition layer and the clamping terminal 213. In severe cases, the first transition layer and the second transition layer will fall off, and the protection effect cannot be achieved. In addition, the excessive temperatures of the flat terminal 113 and the and the clamping terminal 213 might be transferred to the insulating layer of the busbar 11 and the insulating layer of the double-busbar 21, resulting in the melting of the corresponding insulating layers, and the effect of insulative protection cannot be achieved. In severe cases, short circuit of the lines may be caused, resulting in damage to the connection structure, and even burning and other safety accidents. Therefore, the inventor sets the contact resistance between the flat terminal 113 and the the clamping terminal 213 to be less than 9 mΩ.

In order to verify the influence of the contact resistance between the flat terminal 113 and the clamping terminal 213 on the temperature rise and the electrical conductivity of the connecting mechanism, the inventor selects the same busbar 11 and the clamping terminals 213 with different contact resistances, and tests the electrical conductivity and the temperature rise of the plugged structure.

The test of the electrical conductivity is to check the electrical conductivity at the corresponding plugged position after the flat terminal 113 is plugged with the clamping terminal 213 and the plugged structure is electrified. In this embodiment, the electrical conductivity greater than 99% is an ideal value.

The test of the temperature rise is to apply the same current to the plugged structure, detect the temperatures of the flat terminal 113 and the clamping terminal 213 at the same position before the current apply and after the temperature is stable in a closed environment, and take a difference between the temperatures to obtain an absolute value. In this embodiment, the temperature rise greater than 50 K is unqualified.

**Table 16: Influence of different contact resistances between the flat terminal 113 and the clamping terminal 213 on the electrical conductivity and the temperature rise**

| Different contact resistances between the flat terminal 113 and the clamping terminal 213 (mΩ) | | | | | | | | |
|---|---|---|---|---|---|---|---|---|
| 10 | 9 | 8 | 6 | 4 | 3 | 2 | 1 | 0.5 |

| Temperature rise of the plugged structure (k) | | | | | | | | |
|---|---|---|---|---|---|---|---|---|
| 56 | 48 | 42 | 35 | 28 | 24 | 20 | 14 | 7 |

| Electrical conductivity of the plugged structure (%) | | | | | | | | |
|---|---|---|---|---|---|---|---|---|
| 98.8 | 99.4 | 99.6 | 99.6 | 99.7 | 99.8 | 99.8 | 99.9 | 99.9 |

As can be seen from Table 16, when the contact resistance between the flat terminal 113 and the clamping terminal 213 is greater than 9 mΩ, the temperature rise of the plugged structure exceeds 50 K, and at the same time, the electrical conductivity of the plugged structure is less than 99%, which does not meet the standard requirement. Therefore, the inventor sets the contact resistance between the flat terminal 113 and the clamping terminal 213 to be less than 9 mΩ.

Exemplarily, when the contact resistance between the flat terminal 113 and the clamping terminal 213 is less than 1 mΩ, the temperature rise of the plugged structure is small and does not exceed 20K, and the electrical conductivity of the plugged structure reaches 99.9%, i.e., the electrical conduction effect is good. Therefore, the inventor prefers that the contact resistance between the flat terminal 113 and the clamping terminal 213 is less than 1 mΩ.

In an embodiment, the number of times of plugging and unplugging between the male-end connecting mechanism 10 and the female-end connecting mechanism 20 is 9 or more. When the busbar type connecting mechanism is to be assembled with an electrical appliance, the male-end connecting mechanism 10 and the female-end connecting mechanism 20 should be assembled together, and during the subsequent maintenance and disassembly, it might be required to separate the male-end connecting mechanism 10 from the female-end connecting mechanism 20 before plugging and unplugging. Thus, the number of times of plugging and unplugging between the male-end connecting mechanism 10 and the female-end connecting mechanism 20 should not be less than 9. Otherwise, the male-end connecting mechanism 10 or the female-end connecting mechanism 20 may be damaged during certain disassembly or maintenance and the current cannot be conducted, so it is necessary to replace the whole connecting mechanism including the wiring harnesses, which not only consumes the maintenance time but also increases the maintenance cost. Therefore, either materials of the male-end connecting mechanism 10 and the female-end connecting mechanism 20, or a plugging mechanism, a locking mechanism and a sealing mechanism therebetween should be bearable to the disassembly and assembly for at least 9 times to meet the use requirements of the connecting mechanism.

In an embodiment, the weight of the male-end connecting mechanism 10 is less than or equal to 305 g. As illustrated in FIG. 1, the male-end connector is located above the connecting mechanism, and is plugged and fixed with the female-end connecting mechanism 20. When the weight of the male-end connecting mechanism 10 is too large, the female-end connecting mechanism 20 also bears a large weight, so that the whole connecting mechanism vibrates along with the vibration of the electrical appliance. Due to the inertia, the male-end connecting mechanism 10 will be subjected to a large vibration, resulting in abnormal sound which is not allowed during the use of the electrical appliance.

In order to verify the influence of the weight of the male-end connecting mechanism 10 on the abnormal sound of the connecting mechanism, the inventor adopts the same female-end connecting mechanisms 20 and the samples of the male-end connecting mechanism 10 with different weights which are assembled and mounted on a vibration test bench, and then carries out a vibration test to observe whether the male-end connecting mechanism 10 generates abnormal sound during the vibration test. The test results are shown in Table 17.

**Table 17: Influence of the weight of the male-end connecting mechanism 10 on the abnormal sound of the connecting mechanism**

| Weight (g) | 265 | 275 | 285 | 295 | 305 | 315 | 325 | 335 | 345 |
|---|---|---|---|---|---|---|---|---|---|
| Whether there is abnormal sound | No | No | No | No | No | Yes | Yes | Yes | Yes |

As can be seen from Table 17, when the weight of the male-end connecting mechanism 10 is greater than 305 g, abnormal sound is generated in the male-end connecting mechanism 10 during the vibration test, and the test result is unqualified. Therefore, the inventor selects that the weight of the male-end connecting mechanism 10 to be less than or equal to 305 g.

In an embodiment, the height of the male-end connecting mechanism 10 in the plugging-unplugging direction is less than or equal to 208 mm. After being assembled together, the male-end connecting mechanism 10 and the female-end connecting mechanism 20 should be mounted in the electrical appliance. However, the space reserved in the electrical appliance is generally small, and when the male-end connecting mechanism 10 is high, it usually cannot be mounted into the electrical appliance and the raw material will be wasted. Therefore, the male-end connecting mechanism 10 should be designed to be lower than a certain height.

In order to verify the influence of the height of the male-end connecting mechanism 10 in the plugging-unplugging direction on the mounting of the connecting mechanism, the inventor adopts the same female-end connecting mechanisms 20 and the samples of the male-end connecting mechanism 10 with different heights in the plugging-unplugging direction, which are assembled and mounted on the electrical appliance, and observes whether the male-end connecting mechanism 10 interferes with other parts of the electrical appliance during mounting. The test results are shown in Table 18.

**Table 18: Influence of the height of the male-end connecting mechanism 10 in the plugging-unplugging direction on the mounting of the connecting mechanism**

| Height (mm) | 168 | 178 | 188 | 198 | 208 | 218 | 228 | 238 | 248 |
|---|---|---|---|---|---|---|---|---|---|
| Whether there is interference | No | No | No | No | No | Yes | Yes | Yes | Yes |

As can be seen from Table 18, when the height in the plugging-unplugging direction is greater than 208 mm, the male-end connecting mechanism 10 cannot be mounted in the designated position of the electrical appliance, and the test result is unqualified. The height of the male-end connecting mechanism 10 in the plugging-unplugging direction is selected to be less than or equal to 208 mm.

The present disclosure further provides an electric energy transmission device, which includes the busbar type connecting mechanism.

The present disclosure further provides a motor vehicle, which includes the busbar type connecting mechanism and the electric energy transmission device.

The busbar type connecting mechanism of the present disclosure includes the injection-molded male-end housing 12 and female-end housing 22, which are simple in processing and low in cost, and can be directly injected into the busbar 11 for insulation, so that the mounting of the busbar 11 can be reduced, and a front end of the busbar 11 can be molded into various shapes as required, without considering the assembly, thereby saving the processing procedure and reducing the processing cost.

In the busbar type connecting mechanism of the present disclosure, the busbars 11 are stacked at a proper interval to effectively reduce the electromagnetic interference to other parts after the busbars 11 are electrified, thereby eliminating a shielding layer structure of the high-voltage charging harness and meeting the requirements of reducing the cost and weight.

By adopting the clip 30 to clamp and fix the clamping terminal 213, it is possible to increase the pressure applied by the clamping terminal 213 to the flat terminal 113, and avoid the problems that due to long-time use, the clamping force on the clamping terminal 213 is reduced, the contact resistance between the clamping terminal 213 and the flat terminal 113 is increased, the conduction current is increased, and the temperatures of the clamping terminal 213 and the flat terminal 113 are increased, which may cause burning accidents in severe cases.

The embedded high-voltage interlocking structure replaces the previous assembled high-voltage interlocking, and is fixed in the connecting mechanism by integral injection-molding without assembling, so that the cost is reduced and the high-voltage interlocking effect is completely satisfied.

The sealing structure of the connecting mechanism is no longer a separate sealing ring, but is a secondarily injection-molded sealing structure for replacing the traditional sealing ring, so as to be directly molded on the connecting mechanism, and achieve a better injection bonding and a lower cost.

By adopting the temperature measuring structure, it is possible to separately monitor the terminal temperature inside the connecting mechanism, and avoid the situation that the temperature of the connecting mechanism cannot be monitored due to the damage of the temperature sensors in other positions.

## Claims

1. A busbar type connecting mechanism, comprising a male-end connecting mechanism (10) and a female-end connecting mechanism (20), wherein
the male-end connecting mechanism (10) comprises a busbar (11), a flat terminal (113), and a male-end housing (12) connected to the busbar (11) and the flat terminal (113);
the female-end connecting mechanism (20), comprises a double-busbar (21), a clamping terminal (213), and a female-end housing (22) connected to the double-busbar (21) and the clamping terminal (213);
the male-end connecting mechanism (10) and the female-end connecting mechanism (20) are electrically connected to each other through the clamping terminal (213) and the flat terminal (113), and the male-end housing (12) and the female-end housing (22) are connected to each other, to form the busbar type connecting mechanism,
**characterized in that**
the double-busbar (21) includes a second flat wire core (212) which is composed of two flat conductors (214) overlapped with and connected to each other, and the two overlapped flat conductors (214) are attached to each other;
front ends of the two flat conductors (214) form the clamping terminal (213), and the flat terminal (113) is inserted between the front ends of the two flat conductors (214), with two opposite surfaces of the flat terminal (113) respectively contacting inner surfaces of the front ends of the two flat conductors (214) that face each other.

2. The busbar type connecting mechanism according to claim 1, wherein the busbar (11) or the double-busbar (21) has a cross-section with an aspect ratio of 1:1 to 120:1.

3. The busbar type connecting mechanism according to claim 1, wherein there are at least two busbars (11), which are stacked from top to bottom; and the male-end housing (12) is integrally inj ection-molded between at least parts of the busbars (11) and/or at least parts of the flat terminals (113), and/or is integrally injection-molded at outer peripheries of at least parts of the busbars (11) and/or at least parts of the flat terminals (113), to form an insulating structure;
or
there are at least two double-busbars (21), which are stacked from top to bottom; and the female-end housing (22) is integrally injection-molded between at least parts of the double-busbars (21) and/or at least parts of the clamping terminals (213), and/or is integrally injection-molded at outer peripheries of at least parts of the double-busbars (21) and/or at least parts of the clamping terminals (213), to form an insulating structure.

4. The busbar type connecting mechanism according to claim 1, wherein the busbar (11) comprises a first flat wire core (112), and a first outer insulating layer (111) which is partially peeled off to expose the first flat wire core (112); and an end of the first outer insulating layer (111) is inside or abutted against the male-end housing (12);
or
the double-busbar (21) comprises a second flat wire core (212), and a second outer insulating layer (211) which is partially peeled off to expose the second flat wire core (212); and an end of the second outer insulating layer (211) is inside or abutted against the female-end housing (22).

5. The busbar type connecting mechanism according to claim 1, wherein there are at least two busbars (11), which are stacked from top to bottom; and each busbar (11) comprises a first flat wire core (112), and a vertical distance between two first flat wire cores (112) of the busbars (11) is less than or equal to 27 cm;
or
there are at least two double-busbars (21), which are stacked from top to bottom; and each double-busbar (21) comprises a second flat wire core (212), and a vertical distance between two second flat wire cores (212) is less than or equal to 27 cm.

6. The busbar type connecting mechanism according to claim 1, wherein there are at least two busbars (11), which are stacked from top to bottom; and each busbar (11) comprises a first flat wire core (112), and an overlapping degree of two first flat wire cores (112) in a stacking direction is 40% to 100%;
or,
there are at least two double-busbars (21), which are stacked from top to bottom; and each double-busbar (21) comprises a second flat wire core (212), and an overlapping degree between two second flat wire cores (212) in a stacking direction is 40% to 100%.

7. The busbar type connecting mechanism according to claim 1, wherein the busbar (11) comprises a first flat wire core (112); and a front end of the first flat wire core (112) is connected to the flat terminal (113) and the male-end housing (12) wraps at least part of the flat terminal (113), or the first flat wire core (112) forms an integral structure with the flat terminal (113);
or
the double-busbar (21) comprises a second flat wire core (212); and a front end of the second flat wire core (212) is connected to the clamping terminal (213) and the female-end housing (22) wraps at least part of the clamping terminal (213), or the second flat wire core (212) forms an integral structure with the clamping terminal (213).

8. The busbar type connecting mechanism according to claim 1, wherein at least part of the flat terminal (113) protrudes from the male-end housing (12), or the male-end housing (12) has an accommodating cavity and at least part of the flat terminal (113) protrudes from a bottom surface of the accommodating cavity without exceeding the male-end housing (12);
or
at least part of the clamping terminal (213) protrudes from an outer wall of the female-end housing (22), or the female-end housing (22) is provided with an open boss and at least part of the clamping terminal (213) is disposed in the open boss.

9. The busbar type connecting mechanism according to claim 1, wherein the busbar (11) comprises a first flat wire core (112), and a first bent portion (1131) with an angle of 0° to 180° is included between the first flat wire core (112) and the flat terminal (113);
or
the double-busbar (21) comprises a second flat wire core (212), and a second bent portion (2131) with an angle of 0° to 180° is included between a front end of the second flat wire core (212) and the clamping terminal (213).

10. The busbar type connecting mechanism according to claim 1, wherein at least part of the flat terminal (113) is provided with a first transition layer, or an end of the flat terminal (113) is provided with a chamfer;
or
at least part of a surface of the clamping terminal (213) is provided with a second transition layer;
or
a front end of the clamping terminal (213) is provided with an open groove, and a width of the groove on an open side thereof is greater than a width of the groove on a closed side thereof.

11. The busbar type connecting mechanism according to claim 1, wherein the male-end connecting mechanism (10) comprises an interlocking connector (13), at least part of which is integrally injection-molded with the male-end housing (12);
preferably wherein
the female-end connecting mechanism (20) comprises a high-voltage interlocking structure (23), which is electrically connected to the interlocking connector (13) to form a loop.

12. The busbar type connecting mechanism according to claim 1, wherein the clamping terminal (213) is sleeved by a clip, which is made of a memory alloy; preferably wherein a transition temperature of the memory alloy is in a range of 40°Cto 70°C; and when a temperature of the clip is lower than the transition temperature, the clip is in an expanded state, and when the temperature of the clip is higher than the transition temperature, the clip is in a clamped state;
or
the clamping terminal (213) is sleeved by a clip (30), which comprises a sidewall (31) and an elastic element (32) fixed thereon, and the elastic element (32) is connected to the clamping terminal (213);
or
the female-end connecting mechanism (20) and/or the male-end connecting mechanism (10) has a sealing structure (40), preferably wherein the sealing structure (40) is secondarily injection-molded on the female-end housing (22) and/or the male-end housing (12).

13. The busbar type connecting mechanism according to claim 1, wherein the female-end connecting mechanism (20) comprises at least one temperature measuring structure for measuring a temperature of the double-busbar (21) and/or the clamping terminal (213);
or
the female-end connecting mechanism (20) comprises at least one temperature measuring structure, which is attached to the double-busbar (21) and/or the clamping terminal (213) for measuring a temperature of the double-busbar (21) and/or the clamping terminal (213);
or
the female-end connecting mechanism (20) comprises at least one temperature measuring structure, there are at least two double-busbars (21), and the temperature measuring structure is located between the double-busbars (21) for measuring temperatures of the double-busbars (21);
or
the male-end connecting mechanism (10) comprises at least one temperature measuring structure for measuring a temperature of the busbar (11) and/or the flat terminal (113);
or
the male-end connecting mechanism (10) comprises at least one temperature measuring structure, which is attached to the busbar (11) and/or the flat terminal (113) for measuring a temperature of the busbar (11) and/or the flat terminal (113);
or
the male-end connecting mechanism (10) comprises at least one temperature measuring structure, there are at least two busbars (11), and the temperature measuring structure is located between the busbars (11) for measuring temperatures of the busbars (11).

14. An electric energy transmission device, comprising the busbar type connecting mechanism according to any one of claims 1 to 13.

15. A motor vehicle, comprising the busbar type connecting mechanism according to any one of claims 1 to 13.

## Patentansprüche

1. Verbindungsmechanismus vom Sammelschienen-Typ, aufweisend einen Steckverbinder-Mechanismus (10) und einen Buchsenverbinder-Mechanismus (20), wobei
der Steckverbinder-Mechanismus (10) eine Sammelschiene (11), einen Flachanschluss (113) und ein Steckverbindergehäuse (12) aufweist, das mit der Sammelschiene (11) und dem Flachanschluss (113) verbunden ist;
der Buchsenverbinder-Mechanismus (20) eine Doppel-Sammelschiene (21), einen Klemmanschluss (213) und ein Buchsenverbindergehäuse (22) aufweist, das mit der Doppel-Sammelschiene (21) und dem Klemmanschluss (213) verbunden ist;
wobei der Steckverbinder-Mechanismus (10) und der Buchsenverbinder-Mechanismus (20) über den Klemmanschluss (213) und den Flachstecker (113) elektrisch miteinander verbunden sind, und das Steckverbindergehäuse (12) und das Buchsenverbindergehäuse (22) miteinander verbunden sind, um den Verbindungsmechanismus vom Sammelschienen-Typ zu bilden,
**dadurch gekennzeichnet, dass**
die Doppel-Sammelschiene (21) einen zweiten Flachdrahtkern (212) umfasst, der aus zwei Flachleitern (214) besteht, die einander überlappen und miteinander verbunden sind, und die beiden überlappenden Flachleiter (214) aneinander befestigt sind;
die vorderen Enden der beiden Flachleiter (214) den Klemmanschluss (213) bilden, und der Flachanschluss (113) zwischen die vorderen Enden der beiden Flachleiter (214) eingeführt ist, wobei zwei gegenüberliegende Flächen des Flachanschlusses (113) jeweils die einander zugewandten Innenflächen der vorderen Enden der beiden Flachleiter (214) berühren.

2. Verbindungsmechanismus vom Sammelschienen-Typ nach Anspruch 1, bei dem die Sammelschiene (11) oder die Doppel-Sammelschiene (21) einen Querschnitt mit einem Seitenverhältnis von 1:1 bis 120:1 aufweist.

3. Verbindungsmechanismus vom Sammelschienen-Typ nach Anspruch 1, bei dem mindestens zwei Sammelschienen (11) vorhanden sind, die von oben nach unten gestapelt sind; und das Steckverbindergehäuse (12) zwischen zumindest Teilen der Sammelschienen (11) und/oder zumindest Teilen des Flachanschlusses (113) einstückig spritzgegossen ist und/oder an den Außenumfängen von zumindest Teilen der Sammelschienen (11) und/oder zumindest Teilen der Flachanschlüsse (113) einstückig spritzgegossen ist, um eine Isolierstruktur zu bilden;
oder
mindestens zwei Doppel-Sammelschienen (21) vorhanden sind, die von oben nach unten gestapelt sind; und das Buchsenverbindergehäuse (22) zwischen zumindest Teilen der Doppel-Sammelschienen (21) und/oder zumindest Teilen der Klemmanschlüsse (213) einstückig spritzgegossen ist und/oder an den Außenumfängen von zumindest Teilen der Doppel-Sammelschienen (21) und/oder zumindest Teilen der Klemmanschlüsse (213) einstückig spritzgegossen ist, um eine Isolierstruktur zu bilden.

4. Verbindungsmechanismus vom Sammelschienen-Typ nach Anspruch 1, bei dem die Sammelschiene (11) einen ersten Flachdrahtkern (112) und eine erste äußere Isolierschicht (111) aufweist, die teilweise abgezogen ist, um den ersten Flachdrahtkern (112) freizulegen; und ein Ende der ersten äußeren Isolierschicht (111) sich innerhalb des Steckverbindergehäuses (12) befindet oder an diesem anliegt;
oder
die Doppel-Sammelschiene (21) einen zweiten Flachdrahtkern (212) und eine zweite äußere Isolierschicht (211) aufweist, die teilweise abgezogen ist, um den zweiten Flachdrahtkern (212) freizulegen; und ein Ende der zweiten äußeren Isolierschicht (211) sich innerhalb des Buchsenverbindergehäuses (22) befindet oder an diesem anliegt.

5. Verbindungsmechanismus vom Sammelschienen-Typ nach Anspruch 1, bei dem mindestens zwei Sammelschienen (11) vorhanden sind, die von oben nach unten gestapelt sind; und jede Sammelschiene (11) einen ersten Flachdrahtkern (112) aufweist, und ein vertikaler Abstand zwischen zwei ersten Flachdrahtkernen (112) der Sammelschienen (11) kleiner oder gleich 27 cm beträgt;
oder
mindestens zwei Doppel-Sammelschienen (21) vorhanden sind, die von oben nach unten gestapelt sind; und jede Doppel-Sammelschiene (21) einen zweiten Flachdrahtkern (212) aufweist, und ein vertikaler Abstand zwischen zwei zweiten Flachdrahtkernen (212) höchstens 27 cm beträgt.

6. Verbindungsmechanismus vom Sammelschienen-Typ nach Anspruch 1, bei dem mindestens zwei Sammelschienen (11) vorhanden sind, die von oben nach unten gestapelt sind; und jede Sammelschiene (11) einen ersten Flachdrahtkern (112) aufweist, und der Überlappungsgrad zweier erster Flachdrahtkerne (112) in Stapelrichtung 40 % bis 100 % beträgt;
oder
mindestens zwei Doppel-Sammelschienen (21) vorhanden sind, die von oben nach unten gestapelt sind; und jede Doppel-Sammelschiene (21) einen zweiten Flachdrahtkern (212) aufweist, und der Überlappungsgrad zwischen zwei zweiten Flachdrahtkernen (212) in Stapelrichtung 40 % bis 100 % beträgt.

7. Verbindungsmechanismus vom Sammelschienen-Typ nach Anspruch 1, bei dem die Sammelschiene (11) einen ersten Flachdrahtkern (112) aufweist; und ein vorderes Ende des ersten Flachdrahtkerns (112) mit dem Flachanschluss (113) verbunden ist und das Steckverbindergehäuse (12) zumindest einen Teil des Flachanschlusses (113) umschließt, oder der erste Flachdrahtkern (112) eine einstückige Struktur mit dem Flachanschluss (113) bildet;
oder
die Doppel-Sammelschiene (21) einen zweiten Flachdrahtkern (212) aufweist; und ein vorderes Ende des zweiten Flachdrahtkerns (212) mit dem Klemmanschluss (213) verbunden ist und das Buchsenverbindergehäuse (22) zumindest einen Teil des Klemmanschlusses (213) umschließt, oder der zweite Flachdrahtkern (212) eine einstückige Struktur mit dem Klemmanschluss (213) bildet.

8. Verbindungsmechanismus vom Sammelschienen-Typ nach Anspruch 1, bei dem zumindest ein Teil des Flachanschlusses (113) aus dem Steckverbindergehäuse (12) herausragt, oder das Steckverbindergehäuse (12) einen Aufnahmeraum aufweist und zumindest ein Teil des Flachanschlusses (113) aus einer Bodenfläche des Aufnahmeraums herausragt, ohne das Steckverbindergehäuse (12) zu überragen;
oder
mindestens ein Teil des Klemmanschlusses (213) aus einer Außenwand des Buchsenverbindergehäuses (22) herausragt, oder das Buchsenverbindergehäuse (22) mit einem offenen Ansatz versehen ist und mindestens ein Teil des Klemmanschlusses (213) in dem offenen Ansatz angeordnet ist.

9. Verbindungsmechanismus vom Sammelschienen-Typ nach Anspruch 1, bei dem die Sammelschiene (11) einen ersten Flachdrahtkern (112) aufweist und ein erster gebogener Abschnitt (1131) mit einem Winkel von 0° bis 180° zwischen dem ersten Flachdrahtkern (112) und dem Flachanschluss Anschluss (113) vorgesehen ist;
oder
die Doppel-Sammelschiene (21) einen zweiten Flachdrahtkern (212) aufweist, und ein zweiter gebogener Abschnitt (2131) mit einem Winkel von 0° bis 180° zwischen einem vorderen Ende des zweiten Flachdrahtkerns (212) und dem Klemmanschluss (213) vorgesehen ist.

10. Verbindungsmechanismus vom Sammelschienen-Typ nach Anspruch 1, bei dem zumindest ein Teil des Flachanschlusses (113) mit einer ersten Übergangsschicht versehen ist oder ein Ende des Flachanschlusses (113) mit einer Fase versehen ist;
oder
mindestens ein Teil einer Oberfläche des Klemmanschlusses (213) mit einer zweiten Übergangsschicht versehen ist;
oder
ein vorderes Ende des Klemmanschlusses (213) mit einer offenen Nut versehen ist und eine Breite der Nut an ihrer offenen Seite größer ist als eine Breite der Nut an ihrer geschlossenen Seite.

11. Verbindungsmechanismus vom Sammelschienen-Typ nach Anspruch 1, bei dem der Steckverbinder-Mechanismus (10) einen Verriegelungsverbinder (13) aufweist, von dem zumindest ein Teil einstückig mit dem Steckverbindergehäuse (12) spritzgegossen ist;
vorzugsweise bei dem
der Buchsenverbinder-Mechanismus (20) eine Hochspannungs-Verriegelungsstruktur (23) aufweist, die elektrisch mit dem Verriegelungsverbinder (13) verbunden ist, um eine Schleife zu bilden.

12. Verbindungsmechanismus vom Sammelschienen-Typ nach Anspruch 1, bei dem der Klemmanschluss (213) von einer Klammer ummantelt ist, die aus einer Formgedächtnislegierung besteht; vorzugsweise wobei die Phasentemperatur der Formgedächtnislegierung in einem Bereich von 40 °C bis 70 °C liegt; und wenn die Temperatur der Klammer niedriger als die Phasentemperatur ist, sich die Klammer in einem expandierten Zustand befindet, und wenn die Temperatur der Klammer höher als die Phasentemperatur ist, sich die Klammer in einem geklemmten Zustand befindet;
oder
der Klemmanschluss (213) von einer Klammer (30) ummantelt ist, die eine Seitenwand (31) und ein daran befestigtes elastisches Element (32) aufweist, wobei das elastische Element (32) mit dem Klemmanschluss (213) verbunden ist;
oder
der Buchsenverbinder-Mechanismus (20) und/oder der Steckverbinder-Mechanismus (10) eine Dichtungsstruktur (40) aufweist, wobei die Dichtungsstruktur (40) vorzugsweise sekundär auf das Buchsenverbindergehäuse (22) und/oder das Steckverbindergehäuse (12) spritzgegossen ist.

13. Verbindungsmechanismus vom Sammelschienen-Typ nach Anspruch 1, bei dem der Buchsenverbinder-Mechanismus (20) mindestens eine Temperaturmessstruktur zum Messen einer Temperatur der Doppel-Sammelschiene (21) und/oder des Klemmanschlusses (213) aufweist;
oder
der Buchsenverbinder-Mechanismus (20) mindestens eine Temperaturmessstruktur aufweist, die an der Doppel-Sammelschiene (21) und/oder dem Klemmanschluss (213) angebracht ist, um die Temperatur der Doppel-Sammelschiene (21) und/oder des Klemmanschlusses (213) zu messen;
oder
der Buchsenverbinder-Mechanismus (20) mindestens eine Temperaturmessstruktur aufweist, mindestens zwei Doppel-Sammelschienen (21) vorhanden sind, und die Temperaturmessstruktur zwischen den Doppel-Sammelschienen (21) angeordnet ist, um die Temperaturen der Doppel-Sammelschienen (21) zu messen;
oder
der Steckverbinder-Mechanismus (10) mindestens eine Temperaturmessstruktur zur Messung einer Temperatur der Sammelschiene (11) und/oder des Flachanschlusses (113) aufweist;
oder
der Steckverbinder-Mechanismus (10) mindestens eine Temperaturmessstruktur aufweist, die an der Sammelschiene (11) und/oder dem Flachanschluss (113) angebracht ist, um eine Temperatur der Sammelschiene (11) und/oder des Flachanschlusses (113) zu messen;
oder
der Steckverbinder-Mechanismus (10) mindestens eine Temperaturmessstruktur aufweist, mindestens zwei Sammelschienen (11) vorhanden sind, und die Temperaturmessstruktur zwischen den Sammelschienen (11) angeordnet ist, um die Temperaturen der Sammelschienen (11) zu messen.

14. Elektrische Energieübertragungsvorrichtung, aufweisend den Verbindungsmechanismus vom Sammelschienen-Typ gemäß einem der Ansprüche 1 bis 13.

15. Kraftfahrzeug, aufweisend den Verbindungsmechanismus vom Sammelschienen-Typ gemäß einem der Ansprüche 1 bis 13.

## Revendications

1. Mécanisme de connexion de type barre omnibus, comprenant un mécanisme de connecteur mâle (10) et un mécanisme de connecteur femelle (20), dans lequel
le mécanisme de connecteur mâle (10) comprend une barre omnibus (11), une borne plate (113) et un boîtier de connecteur mâle (12) relié à la barre omnibus (11) et à la borne plate (113) ;
le mécanisme de connecteur femelle (20) comprend une double barre omnibus (21), une borne à vis (213) et un boîtier de connecteur femelle (22) relié à la double barre omnibus (21) et à la borne à vis (213) ;
le mécanisme de connecteur mâle (10) et le mécanisme de connecteur femelle (20) étant reliés électriquement l'un à l'autre par l'intermédiaire de la borne à vis (213) et de la borne plate (113), et le boîtier de connecteur mâle (12) et le boîtier de connecteur femelle (22) sont reliés l'un à l'autre pour former le mécanisme de connexion de type barre omnibus,
**caractérisé en ce que**
la double barre omnibus (21) comprend un deuxième noyau de fil plat (212) constitué de deux conducteurs plats (214) qui se chevauchent et sont reliés entre eux, et les deux conducteurs plats (214) qui se chevauchent sont fixés l'un à l'autre;
les extrémités avant des deux conducteurs plats (214) forment la borne à vis (213), et la borne plate (113) est insérée entre les extrémités avant des deux conducteurs plats (214), deux faces opposées de la borne plate (113) étant respectivement en contact avec les faces intérieures en regard des extrémités avant des deux conducteurs plats (214).

2. Mécanisme de connexion de type barre omnibus selon la revendication 1, dans lequel la barre omnibus (11) ou la double barre omnibus (21) présente une section transversale avec un rapport d'aspect compris entre 1:1 et 120:1.

3. Mécanisme de connexion de type barre omnibus selon la revendication 1, dans lequel au moins deux barres omnibus (11) sont empilées de haut en bas; et le boîtier de connecteur mâle (12) est moulé par injection d'un seul tenant entre au moins des parties des barres omnibus (11) et/ou au moins des parties de la borne plate (113) et/ou est moulé par injection d'un seul tenant sur les périphéries extérieures d'au moins certaines parties des barres omnibus (11) et/ou d'au moins certaines parties des bornes plates (113) afin de former une structure isolante;
ou
au moins deux doubles barres omnibus (21) sont présentes, empilées de haut en bas; et le boîtier de connecteur femelle (22) est moulé par injection d'un seul tenant entre au moins certaines parties des doubles barres omnibus (21) et/ou au moins certaines parties des bornes à vis (213) et/ou est moulé par injection d'un seul tenant sur les périphéries extérieures d'au moins certaines parties des doubles barres omnibus (21) et/ou d'au moins certaines parties des bornes à vis (213) afin de former une structure isolante.

4. Mécanisme de connexion de type barre omnibus selon la revendication 1, dans lequel la barre omnibus (11) comporte un premier noyau de fil plat (112) et une première couche isolante externe (111) qui est partiellement retirée afin de mettre à nu le premier noyau de fil plat (112); et une extrémité de la première couche isolante externe (111) se trouve à l'intérieur du boîtier de connecteur mâle (12) ou est en contact avec celui-ci;
ou
la double barre omnibus (21) comporte un deuxième noyau de fil plat (212) et une deuxième couche isolante externe (211) qui est partiellement retirée pour exposer le deuxième noyau de fil plat (212); et une extrémité de la deuxième couche isolante externe (211) se trouve à l'intérieur du boîtier de connecteur femelle (22) ou est en contact avec celui-ci.

5. Mécanisme de connexion de type barre omnibus selon la revendication 1, dans lequel il existe au moins deux barres omnibus (11) empilées de haut en bas; et chaque barre omnibus (11) comporte un premier noyau de fil plat (112), et une distance verticale entre deux premiers noyaux de fil plat (112) des barres omnibus (11) est inférieure ou égale à 27 cm;
ou
au moins deux doubles barres omnibus (21) sont prévues, empilées de haut en bas; et chaque double barre omnibus (21) comporte un deuxième noyau en fil plat (212), et la distance verticale entre deux deuxièmes noyaux en fil plat (212) est au plus de 27 cm.

6. Mécanisme de connexion de type barre omnibus selon la revendication 1, dans lequel au moins deux barres omnibus (11) sont empilées de haut en bas; et chaque barre omnibus (11) comporte un premier noyau en fil plat (112), et le degré de chevauchement de deux premiers noyaux en fil plat (112) dans le sens d'empilement est compris entre 40 % et 100 %;
ou
au moins deux doubles barres omnibus (21) sont présentes, empilées de haut en bas; et chaque double barre omnibus (21) comporte un deuxième noyau en fil plat (212), et le degré de chevauchement entre deux deuxièmes noyaux en fil plat (212) dans le sens d'empilement est compris entre 40 % et 100 %.

7. Mécanisme de connexion de type barre omnibus selon la revendication 1, dans lequel la barre omnibus (11) comporte un premier noyau en fil plat (112); et une extrémité avant du premier noyau de fil plat (112) est reliée à la borne plate (113) et le boîtier de connecteur mâle (12) entoure au moins une partie de la borne plate (113), ou le premier noyau de fil plat (112) forme une structure monobloc avec la borne plate (113);
ou
la double barre omnibus (21) comporte un deuxième noyau de fil plat (212) ; et une extrémité avant du deuxième noyau de fil plat (212) est reliée à la borne à vis (213) et le boîtier de connecteur femelle (22) entoure au moins une partie de la borne à vis (213), ou le deuxième noyau de fil plat (212) forme une structure monobloc avec la borne à vis (213).

8. Mécanisme de connexion de type barre omnibus selon la revendication 1, dans lequel au moins une partie de la borne plate (113) fait saillie hors du boîtier de connecteur mâle (12), ou le boîtier de connecteur mâle (12) comporte un espace de réception et au moins une partie de la borne plate (113) dépasse d'une surface inférieure de l'espace de réception sans dépasser du boîtier de connecteur mâle (12);
ou
au moins une partie de la borne à vis (213) dépasse d'une paroi extérieure du boîtier de connecteur femelle (22), ou le boîtier de connecteur femelle (22) est muni d'un rebord ouvert et au moins une partie de la borne à vis (213) est disposée dans le rebord ouvert.

9. Mécanisme de connexion de type barre omnibus selon la revendication 1, dans lequel la barre omnibus (11) comporte un premier noyau en fil plat (112) et une première partie courbée (1131) formant un angle de 0° à 180° entre le premier noyau en fil plat (112) et la borne plate (113);
ou
la double barre omnibus (21) comporte un deuxième noyau de fil plat (212), et une deuxième partie courbée (2131) formant un angle de 0° à 180° est prévue entre une extrémité avant du deuxième noyau de fil plat (212) et la borne à vis (213).

10. Mécanisme de connexion de type barre omnibus selon la revendication 1, dans lequel au moins une partie de la borne plate (113) est pourvue d'une première couche de transition ou une extrémité de la borne plate (113) est pourvue d'un chanfrein;
ou
au moins une partie d'une surface de la borne à vis (213) est pourvue d'une deuxième couche de transition;
ou
une extrémité avant de la borne à vis (213) est pourvue d'une rainure ouverte et une largeur de la rainure au niveau de son côté ouvert est supérieure à une largeur de la rainure au niveau de son côté fermé.

11. Mécanisme de connexion de type barre omnibus selon la revendication 1, dans lequel le mécanisme de connecteur mâle (10) comprend un connecteur à verrouillage (13) dont au moins une partie est moulée par injection d'un seul tenant avec le boîtier de connecteur mâle (12);
de préférence dans lequel
le mécanisme de connecteur femelle (20) comprend une structure de verrouillage haute tension (23) qui est reliée électriquement au connecteur de verrouillage (13) afin de former une boucle.

12. Mécanisme de connexion de type barre omnibus selon la revendication 1, dans lequel la borne à vis (213) est recouverte d'une pince constituée d'un alliage à mémoire de forme; de préférence, la température de phase de l'alliage à mémoire de forme se situant dans une plage de 40 °C à 70 °C; et lorsque la température de la pince est inférieure à la température de phase, la pince se trouve dans un état expansé, et lorsque la température de la pince est supérieure à la température de phase, la pince se trouve dans un état serré;
ou
la borne à vis (213) est recouverte d'une pince (30) qui comporte une paroi latérale (31) et un élément élastique (32) fixé à celle-ci, l'élément élastique (32) étant relié à la borne à vis (213) ;
ou
le mécanisme de connecteur femelle (20) et/ou le mécanisme de connecteur mâle (10) comporte une structure d'étanchéité (40), la structure d'étanchéité (40) étant de préférence moulée par injection de manière secondaire sur le boîtier de connecteur femelle (22) et/ou le boîtier de connecteur mâle (12).

13. Mécanisme de connexion de type barre omnibus selon la revendication 1, dans lequel le mécanisme de connecteur femelle (20) comporte au moins une structure de mesure de température destinée à mesurer une température de la double barre omnibus (21) et/ou de la borne à vis (213);
ou
le mécanisme de connecteur femelle (20) comprend au moins une structure de mesure de température qui est fixée à la double barre omnibus (21) et/ou à la borne à vis (213) afin de mesurer la température de la double barre omnibus (21) et/ou de la borne à vis (213) ;
ou
le mécanisme de connecteur femelle (20) comporte au moins une structure de mesure de température, au moins deux barres omnibus doubles (21) sont présentes, et la structure de mesure de température est disposée entre les doubles barres omnibus (21) afin de mesurer les températures des double barres omnibus (21);
ou
le mécanisme de connecteur mâle (10) comporte au moins une structure de mesure de température pour mesurer une température de la barre omnibus (11) et/ou de la borne plate (113) ;
ou
le mécanisme de connecteur mâle (10) comporte au moins un capteur de température fixé à la barre omnibus (11) et/ou à la borne plate (113) afin de mesurer la température de la barre omnibus (11) et/ou de la borne plate (113);
ou
le mécanisme de connexion mâle (10) comporte au moins une structure de mesure de température, il existe au moins deux barres omnibus (11), et la structure de mesure de température est disposée entre les barres omnibus (11) afin de mesurer les températures des barres omnibus (11).

14. Dispositif de transmission d'énergie électrique comprenant le mécanisme de connexion de type barre omnibus selon l'une des revendications 1 à 13.

15. Véhicule automobile comprenant le mécanisme de connexion de type barres omnibus selon l'une des revendications 1 à 13.
